# EUROPÄISCHE PATENTSCHRIFT

(11) **EP 3 556 790 B1**
(45) Veröffentlichungstag und Bekanntmachung des Hinweises auf die Patenterteilung: **21.07.2021**
(21) Anmeldenummer: 18167525.7
(22) Anmeldetag: 16.04.2018
(51) Int. Cl.: C08G 18/80, C07F 7/18

(54) **NIEDRIGVISKOSE VERNETZER ENTHALTEND ALKOXYSILANGRUPPEN**
LOW VISCOSITY CROSSLINKERS CONTAINING ALKOXYSILANE GROUPS
AGENT DE RÉTICULATION À FAIBLE VISCOSITÉ CONTENANT DES GROUPES ALCOXYSILANE

(43) Veröffentlichungstag der Anmeldung: 23.10.2019
(73) Patentinhaber: Evonik Operations GmbH, 45128 Essen (DE)
(72) Erfinder: STACHE, Wiebke, 45699 Herten (DE); SPYROU, Emmanouil, 46514 Schermbeck (DE); BRÜCKNER, Iris, 46284 Dorsten (DE); KLAWIKOWSKI, Ralf, 45665 Recklinghausen (DE); PFINGSTEN, Jan, 44577 Castrop-Rauxel (DE); SCHODER, Judith, 45721 Haltern am See (DE)
(74) Vertreter: Evonik Patent Association

(56) Entgegenhaltungen:
- US-A1- 2007 123 644
- US-A1- 2009 011 256

## Beschreibung

Die vorliegende Erfindung betrifft Vernetzer basierend auf eine Isocyanat-Gruppe enthaltenden Alkoxysilanen und Alkoxysilangemischen, ein Verfahren zu deren Herstellung, Zusammensetzungen, umfassend diese Vernetzer und deren Verwendung als Ausgangskomponente bei der Herstellung von Beschichtungsmitteln oder als Lackbindemittelkomponente, Klebstoff- oder Dichtstoffbindemittel oder Bindemittelkomponenten mit gegenüber Alkoxysilangruppen reaktionsfähigen Gruppen.

Polyisocyanate werden in der Lack-, Kleb-, und Dichtstofftechnologie aufgrund ihrer hohen Reaktivität und ihrer vielseitigen Verwendbarkeit bevorzugt eingesetzt. Weit verbreitet ist der Einsatz von Polyisocyanaten als Vernetzer von Acrylatharzen, hergestellt nach dem Verfahren der Lösungspolymerisation. Die Vernetzungsreaktion basiert dabei auf der Reaktion zwischen den in den Acrylatharzen enthaltenen OH-Gruppen mit der NCO-Funktion der Polyisocyanate.

Aus toxikologischen und aus arbeitsplatzhygienischen Gründen sind freie monomere Diisocyanate dabei unerwünscht. Daher ist man bestrebt, Polyisocyanate statt Diisocyanate einzusetzen, da Polyisocyanate durch ihren niedrigeren Dampfdruck als weniger gefährlich eingestuft werden können. Die gängigen Polyisocyanate basieren entweder auf einer Isocyanurat- oder BiuretStruktur. Nachteilig ist, dass die Polyisocyanate eine höhere Viskosität als die monomeren Diisocyanate besitzen.

Alternativ können die monomeren Diisocyanate durch eine Reaktion mit alkoholhaltigen Komponenten in ein Prepolymer überführt werden. Dies geschieht beispielsweise durch Reaktion mit Polyester- oder Polyetheralkoholen und nachfolgende destillative Abtrennung des überschüssigen monomeren Diisocyanats. Das entstehende monomerarme NCO-haltige Prepolymer hat aber in der Regel eine signifikant erhöhte Viskosität und einen deutlich geringeren NCO-Gehalt, was zu einer geringeren Vernetzungsdichte führt. Beide Eigenschaften sind unerwünscht. Vor dem Hintergrund einer zunehmend strengeren Umweltgesetzgebung wird inzwischen nach toxikologisch unbedenklichen, NCO-freien Vernetzern gesucht, die gleichzeitig auch eine niedrige Viskosität besitzen, so dass sie in Lacken mit reduziertem Lösemittelgehalt eingesetzt werden können.

US 2009/0011256 A1 offenbart Beschichtungszusammensetzungen umfassend eine blockierte Isocyanatverbindung mit einer Isocyanatgruppe, bei der das Blockierungsmittel ein Malonsäurediester ist. Auch US 2007/0123644 A1 offenbart Isocyanatverbindungen, bei denen eine Isocyanatgruppe mit einer Malonatgruppe blockiert sein kann.

DE10 2012 217 549 beschreibt niedrigviskose monomerarme NCO-Prepolymere, die aus der Reaktion eines Überschusses an Diisocyanaten mit einer CH-aziden Verbindung entstehen. Nach Abtrennung des überschüssigen monomeren Diisocyanates resultieren monomerarme NCOhaltigen Prepolymere mit hohem NCO-Gehalt und niedriger Viskosität. Nachteilig ist aber, dass es sich um NCO-haltige Produkte handelt, welche aus toxikologischer Sicht zu vermeiden sind.

Wasserdispergierbare Polyisocyanate stellen eine Klasse von hydrophilen Vernetzern dar, die in den letzten Jahren für verschiedene Anwendungsgebiete an Bedeutung gewannen. Sie finden heute insbesondere als Vernetzerkomponenten für Acrylat-basierte Lacke, qualitativ hochwertige wasserverdünnbare Zweikomponenten-Polyurethan-Lacke (2K-PUR-Lacke) oder als Zusatzmittel für wässrige Dispersionsklebstoffe Verwendung. Sie dienen zur Vernetzung wässriger Dispersionen in der Textil- bzw. Lederausrüstung oder formaldehydfreier Textildruckfarben und eignen sich darüber hinaus beispielsweise auch als Hilfsmittel zur Nassverfestigung von Papier, wie z. B. in der EP 0 959 087 A1 offenbart.

Es ist somit die Aufgabe der vorliegenden Erfindung, die Nachteile des bekannten Standes der Technik zu vermeiden. Insbesondere ist es Aufgabe der vorliegenden Erfindung, Vernetzer, vorzugsweise niedrigviskose Vernetzer, bereitzustellen, die als Zusatz in Beschichtungszusammensetzungen zu harten und/oder chemikalienbeständigen Beschichtungen führen.

Überraschenderweise wird die vorliegende Aufgabe durch die erfindungsgemäßen Vernetzer gelöst, die insbesondere Reaktionsprodukte aus Isocyanatoalkylalkoxysilanen und CH-aziden Verbindungen sind, wobei insbesondere NCO-freie Vernetzer und vorzugsweise Vernetzer mit niedriger Viskosität und guter Kompatibilität mit lösemittelhaltigen Lackbindemitteln, entstehen. Die erfindungsgemäßen niedrigviskosen Vernetzer sind für den Einsatz in Lackformulierungen geeignet und führen zu harten, chemikalienbeständigen Beschichtungen.

Die vorliegende Erfindung betrifft einen Vernetzer der Formel I oder einer Mischung von mindestens zwei Vernetzern der Formel (I) 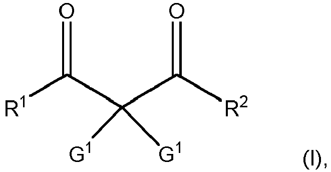
wobei R¹ und R² jeweils unabhängig voneinander ausgewählt sind aus H, -(CH₂)ᵣR⁴, mit r = 0 bis 12, insbesondere r = 1 bis 8, -OR⁵, -NHR⁵, wobei R⁴ und R⁵ jeweils unabhängig voneinander aus der Gruppe, bestehend aus H, einer optional ein Heteroatom, insbesondere -O- und/oder -N-, enthaltenden Alkylgruppe mit 1 bis 18 C-Atomen, einer optional ein Heteroatom, insbesondere -O-und/oder-N-, enthaltenden Cycloalkylgruppe mit 3 bis 18 C-Atomen, einer optional ein Heteroatom, insbesondere -O- und/oder -N-, enthaltenden Alkylarylgruppe mit 6 bis 18 C-Atomen, einer bivalenten Alkylengruppe mit 1 bis 10 C-Atomen, einer Alkylenoxidgruppe mit mindestens 4 C-Atomen, insbesondere mit 4 bis 16 C-Atomen, beispielsweise eine Epoxybutyl-, Epoxypentyl-, Epoxyhexyl-, Epoxyheptyl-, Epoxyoctyl-, Epoxynonyl- oder Epoxydecylgruppe, einer Polyethergruppe, wie Polyalkylenoxidpolyether, einer Polyhydroxy-funktionelle Gruppe mit 1 bis 18 C-Atomen, einer-O- und/oder-N- enthaltenden Heteroaromatgruppe mit 5 bis 18 C-Atomen und einer-O- oder -NH-Polyethergruppe, der eine oder mehrere verschiedene Polyglykoleinheiten (CH₂CH₂O)ₚR"enthält, wovon vorzugsweise mindestens eine endständig angeordnet ist, wobei p 4 bis 20 und R" ein Alkyl-Rest mit 1 bis 18 C-Atomen oder H ist, ausgewählt werden, und
wobei jedes G¹ einer Gruppe der Formel llaentspricht,

   -(C=O)-NH-R-Si(OR')₃ (IIa),
wobei R in der Formel (IIa) jeweils unabhängig voneinander einem aliphatischen (Cyclo)Alkylenrest mit 1 bis 10 C-Atomen entspricht, und R' in Formel (IIa) jeweils unabhängig einen linearen, verzweigten oder cyclischen Alkylrest mit 1 bis 10 C-Atomen darstellt.

In einer bevorzugten Ausführungsform ist a) in dem Vernetzer der Formel (I) mindestens eines von R¹ oder R² ausgewählt aus -OR⁵, wobei R⁵ wie vorstehend definiert ist, oder sind b) in dem Vernetzer der Formel (I) R¹ und R² ausgewählt aus -OR₅, wobei R⁵ wie vorstehend definiert ist.

Beide G¹ in dem Vernetzer der Formel (I) entsprechen einer Gruppe der Formel (IIa).

Gegenstand der Erfindung ist auch eine Zusammensetzung, umfassend mindestens einen Vernetzer der allgemeinen Formel I oder eine Mischung enthaltend mindestens zwei der Vernetzer der allgemeinen Formel I, 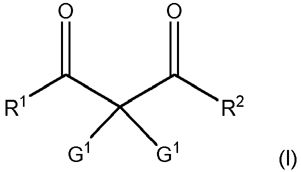
wobei R¹ und R² jeweils unabhängig voneinander aus H, -(CH₂)ᵣR⁴, mit r = 0 bis 12, insbesondere r = 1 bis 8, -OR⁵ und -NHR⁵ ausgewählt werden, wobei R⁴ und R⁵ jeweils unabhängig voneinander aus der Gruppe, bestehend aus H, einer optional ein Heteroatom, insbesondere -O- und/oder -N-, enthaltenden Alkylgruppe mit 1 bis 18 C-Atomen, einer optional ein Heteroatom, insbesondere -O-und/oder-N-, enthaltenden Cycloalkylgruppe mit 3 bis 18 C-Atomen, einer optional ein Heteroatom, insbesondere -O- und/oder-N-, enthaltenden Alkylarylgruppe mit 6 bis 18 C-Atomen, einer bivalenten Alkylengruppe mit 1 bis 10 C-Atomen, einer Alkylenoxidgruppe mit mindestens 4 C-Atomen, insbesondere mit 4 bis 16 C-Atomen, beispielsweise eine Epoxybutyl-, Epoxypentyl-, Epoxyhexyl-, Epoxyheptyl-, Epoxyoctyl-, Epoxynonyl- oder Epoxydecylgruppe, einer Polyethergruppe, wie Polyalkylenoxidpolyether, einer Polyhydroxy-funktionelle Gruppe mit 1 bis 18 C-Atomen, einer -O- und/oder -N- enthaltenden Heteroaromatgruppe mit 5 bis 18 C-Atomen und einer -O- oder -NH-Polyethergruppe, der eine oder mehrere verschiedene Polyglykoleinheiten (CH₂CH₂O)ₚR"enthält, wovon vorzugsweise mindestens eine endständig angeordnet ist, wobei p 4 bis 20 und R" ein Alkyl-Rest mit 1 bis 18 C-Atomen oder H ist, und
wobei jedes G¹ einer Gruppe der Formel IIa entspricht,

   -(C=O)-NH-R-Si(OR')₃ (IIa),
wobei R in der Formel (IIa) jeweils unabhängig voneinander einem aliphatischen (Cyclo)Alkylenrest mit 1 bis 10 C-Atomen entspricht, und R' in Formel (IIa) jeweils unabhängig einen linearen, verzweigten oder cyclischen Alkylrest mit 1 bis 10 C-Atomen darstellt.

Unter (Cyclo)Alkylenresten sind dabei gleichermaßen Cycloalkylenreste und Alkylenreste zu verstehen, insbesondere Cycloalkylenreste oder Alkylenreste mit 1 bis 10 C-Atomen. Vorzugsweise ist R der Formel (IIa) jeweils unabhängig voneinander ein aliphatischer (Cyclo)Alkylenrest, bevorzugt sind bivalente Alkylenreste mit 1 bis 10 C-Atomen, besonders bevorzugt sind Alkylenreste ausgewählt aus Methylen, Ethylen, Propylen, Butylen, Heptylen und Hexylen. C-Atom wird synonym zu Kohlenstoffatom verstanden.

In alternativen Ausführungsformen kann es sich bei der Zusammensetzung um eine wässrige Zusammensetzung handeln, insbesondere wässrige Dispersionen, vorzugsweise Emulsionen.

In einer bevorzugten Zusammensetzung sind einer von R¹ und R² oder sowohl R¹ und R² in dem Vernetzer der Formel (I) oder der Mischung von mindestens zwei der Vernetzer der Formel (I) in der Zusammensetzung ausgewählt aus -OR⁵, wobei R⁵ wie vorstehend definiert ist.

Beide G¹ in dem Vernetzer der Formel (I) entsprechen einer Gruppe der Formel (IIa).
In einer besonders bevorzugten Ausführungsform ist das R in der Formel (IIa) jeweils unabhängig voneinander ein aliphatischer Alkylenrest mit 1 bis 10 C-Atomen und das R' jeweils unabhängig voneinander ein linearer, verzweigter oder cyclischer Alkylrest mit 1 bis 4 C-Atomen. Besonders bevorzugt ist R in Formel (IIa) jeweils unabhängig voneinander ein aliphatischer Alkylenrest mit 1 bis 4 C-Atomen, und R' jeweils unabhängig voneinander Methyl oder Ethyl.

In einer weiterhin bevorzugten Ausführungsform ist das R in Formel (IIa) jeweils unabhängig voneinander ein aliphatischer Alkylenrest mit 1 bis 10 C-Atomen, ist das R' jeweils unabhängig voneinander ein linearer, verzweigter oder cyclischer Alkylrest mit 1 bis 4 C-Atomen, und sind R¹ und R² in der Formel (I) jeweils unabhängig ausgewählt aus -OR⁵, wobei R⁵ ausgewählt ist aus einer Alkylgruppe mit 1 bis 18 C-Atomen, einer Cycloalkylgruppe mit 3 bis 18 C-Atomen, einer

Alkylarylgruppe mit 6 bis 18 C-Atomen und einer Alkylenoxidgruppe mit mindestens 4 C-Atomen.

In besonders bevorzugten Ausführungsformen sind die Reste R¹ und R² der Vernetzer der Formel (I) oder eine Mischung aus mindestens zwei der Vernetzer der Formel (I) oder die Zusammensetzung umfassend einen Vernetzer oder Mischungen davon, wie folgt definiert:
a) R¹ und R² in Formel (I) ausgewählt sind -OR⁵, wobei R⁵ wie vorstehend definiert ist, oder
b) R¹ in Formel (I) ausgewählt ist aus -(CH₂)ᵣR⁴, mit (i) r = 0 oder (ii) r =1 bis 12, insbesondere r = 1 bis 8, wobei R⁴ jeweils unabhängig voneinander aus der Gruppe, bestehend aus einer optional ein Heteroatom, insbesondere -O- und/oder-N-, enthaltenden Alkylgruppe mit 1 bis 18 C-Atomen, einer optional ein Heteroatom, insbesondere -O- und/oder -N-, enthaltenden Cycloalkylgruppe mit 3 bis 18 C-Atomen, einer ein Heteroatom, insbesondere -O- und/oder -N-, enthaltenden Alkylarylgruppe mit 6 bis 18 C-Atomen, einer Alkylenoxidgruppe mit mindestens 4 C-Atomen, insbesondere mit 4 bis 16 C-Atomen und einer -O- und/oder -N- enthaltenden Heteroaromatgruppe mit 5 bis 18 C-Atomen, ausgewählt wird, und R² ausgewählt ist aus -OR⁵, wobei R⁵ wie vorstehend definiert ist.

Bevorzugt ist R⁵ in der Formel (I) in der vorstehenden Alternative a) ausgewählt aus der Gruppe, bestehend aus einer Alkylgruppe mit 1 bis 10 C-Atomen, einer Cycloalkylgruppe mit 3 bis 10 C-Atomen und einer Alkylenoxidgruppe mit mindestens 4 C-Atomen, insbesondere mit 4 bis 16 C-Atomen, und in der vorstehenden Alternative b) ausgewaählt aus der Gruppe, bestehend aus einer Polyethergruppe, wie Polyalkylenoxidpolyether, einer Polyhydroxy-funktionelle Gruppe mit 1 bis 18 C-Atomen und einer -O- oder -NH-Polyethergruppe, der eine oder mehrere verschiedene Polyglykoleinheiten (CH₂CH₂O)ₚR"enthält, wovon vorzugsweise mindestens eine endständig angeordnet ist, wobei p 4 bis 20 und R" ein Alkyl-Rest mit 1 bis 18 C-Atomen oder H ist, ausgewählt wird
Bevorzugte Polyether gemäß R⁴ und/oder -OR⁵ können Polyethylenglycol-Polyether wie -O-(CH₂CH₂O)ₓ-R* mit x = 2 bis 100, insbesondere 2 bis 50, oder Polypropylenglycol-Polyether, wie auch O-(CH₂CH₃CH₂O)_{y}-R* oder O-(CH₂CH₂CH₃O)_{y}-R* mit y = 2 bis 100, insbesondere 2 bis 50 sein.

In einer besonders bevorzugten Ausführungsform der vorliegenden Erfindung ist der Vernetzer der Formel (I) einen β-Di-Ester, beispielsweise ein Malonsäureester, ein cyclisches β-Di-Keton, einen β -Ketoester und/oder ein β-Amidester darstellt. Der Vernetzer der Formel (I) ist insbesondere ein Malonsäureester oder ein β-Ketoester.

Neben den beiden Carbonyl-Gruppen kann die Verbindung der Formel (I) zusätzlich mindestens eine elektronenziehende Gruppe oder mindestens einen elektronenziehenden Substituenten aufweisen, insbesondere umfasst die elektronenziehende Gruppe oder der Substituent mindestens ein elektronegativeres Atom als Kohlenstoff. Bei der elektronenziehenden Gruppe kann es sich um Gruppen beliebiger Atome handeln, die durch induktive (z. B. -l-Effekt) und/oder mesomere Effekte (z. B. -M-Effekt) zu einer CH-Azidität des [alpha]-ständigen Wasserstoffes führen.

Die elektronenziehenden Substituenten oder die elektronenziehenden Gruppen weisen vorzugsweise mindestens ein elektronegativeres Atom als ein C-Atom auf und können wie folgt definiert sein:
Die elektronenziehenden Substituenten sind vorzugsweise ausgewählt aus der Gruppe, bestehend aus Halogen, vorzugsweise Cl, Br, F, Sauerstoff und/oder Stickstoff.

Die elektronenziehenden Gruppen sind vorzugsweise ausgewählt aus der Gruppe, bestehend aus Gruppen, die einen oder mehrere der vorgenannten elektronenziehenden Substituenten umfassen, Ester-, Sulfoxid-, Sulfon-, Nitro-, Phosphonat-, Nitril-, Isonitril-, Amid- und Carbonyl-Gruppen.

Nach einer besonders bevorzugten Ausführungsform kann der Vernetzer der Formel (I) oder die Zusammensetzung enthaltend den Vernetzer der allgemeinen Formel (I) oder die Mischung enthaltend mindestens zwei der Vernetzer der allgemeinen Formel (I), wie vorstehend definiert, erhalten werden oder ist erhältlich, indem in einem Schritt (i):
mindestens ein Isocyanatoalkylalkoxysilan der Formel (II) oder eine Mischung von mindestens zwei der Isocyanatoalkylalkoxysilane der Formel (II)

(R'O)₃Si-R-N=C=O (II)

wobei R jeweils unabhängig einem aliphatischen (Cyclo)Alkylenrest mit 1 bis 10 C-Atomen entspricht, und R' jeweils unabhängig einen linearen, verzweigten oder cyclischen Alkylrest mit 1 bis 10 C-Atomen darstellt,
mit einer organofunktionellen C-H-aziden Verbindung der Formel (III) mit mindestens zwei aziden Wasserstoffatomen umgesetzt wird, 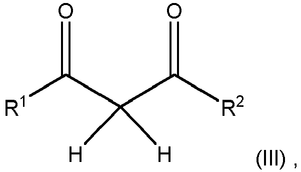 wobei R¹ und R² jeweils unabhängig voneinander ausgewählt sind aus H, -(CH₂)ᵣR⁴, mit r = 0 bis 12, insbesondere r = 1 bis 8, -OR⁵ und -NHR⁵ ausgewählt werden, wobei R⁴ und R⁵ jeweils unabhängig voneinander aus der Gruppe, bestehend aus H, einer optional ein Heteroatom, insbesondere -O- und/oder-N-, enthaltenden Alkylgruppe mit 1 bis 18 C-Atomen, einer optional ein Heteroatom, insbesondere -O- und/oder-N-, enthaltenden Cycloalkylgruppe mit 3 bis 18 C-Atomen, einer optional ein Heteroatom, insbesondere -O- und/oder -N-, enthaltenden Alkylarylgruppe mit 6 bis 18 C-Atomen, einer bivalenten Alkylengruppe mit 1 bis 10 C-Atomen, einer Alkylenoxidgruppe mit mindestens 4 C-Atomen, insbesondere mit 4 bis 16 C-Atomen, beispielsweise eine Epoxybutyl-, Epoxypentyl-, Epoxyhexyl-, Epoxyheptyl-, Epoxyoctyl-, Epoxynonyl- oder Epoxydecylgruppe, einer Polyethergruppe, wie Polyalkylenoxidpolyether, einer Polyhydroxy-funktionelle Gruppe mit 1 bis 18 C-Atomen, einer -O- und/oder -N- enthaltenden Heteroaromatgruppe mit 5 bis 18 C-Atomen und einer -O- oder -NH-Polyethergruppe, der eine oder mehrere verschiedene Polyglykoleinheiten (CH₂CH₂O)ₚR"enthält, wovon vorzugsweise mindestens eine endständig angeordnet ist, wobei p 4 bis 20 und R" ein Alkyl-Rest mit 1 bis 18 C-Atomen oder H ist.

Vorzugsweise ist mindestens eines von R¹ oder R² ausgewählt aus -OR⁵ oder -NHR⁵, besonders bevorzugt ist mindestens eines von R¹ oder R² ausgewählt aus -OR⁵. Weiterhin bevorzugt werden sowohl R¹ als auch R² ausgewählt aus -OR⁵. Nach einer besonders bevorzugten Alternative können in Formel (III) R¹ und R² ausgewählt sein aus -(CH₂)ᵣR⁴, mit r = 2 bis 12 und -OR⁵, wobei R⁴ ausgewählt aus H, einer Alkylgruppe mit 1 bis 18 C-Atomen, einer Cycloalkylgruppe mit 3 bis 18 C-Atomen und einer Alkylaryl mit 6 bis 18 C-Atomen, und wobei R⁵ ausgewählt wird aus einer Alkylgruppe mit 1 bis 18 C-Atomen, einer Alkylarylgruppe mit 6 bis 18 C-Atomen, einer Polyethergruppe, wie Polyalkylenoxidpolyether, wobei insbesondere diese Verbindung der Formel (III) in Kombination mit mindestens einem Isocyanatotrimethoxysilan der Formel (II) oder einer Mischung von einem Isocyanatoalkylalkoxysilan der Formel (II) umgesetzt wird.

Bevorzugt können alle Alkyl-Reste R' in den Formeln (I), (IIa) und (II) gleich sein. Bevorzugt kann jeder Rest R' unabhängig voneinander ausgewählt sein aus der Gruppe bestehend aus Methyl, Ethyl, und i-Propyl. Bevorzugt sind Ethyl und Methyl. Besonders bevorzugt ist jedes R' ein MethylRest, da die resultierenden Verbindungen dann besonders reaktiv sind.

Überraschenderweise wurde gefunden, dass diese Reaktionsprodukte eine sehr niedrige Viskosität aufweisen können. Die Reaktionsprodukte können auch hydrophil sein und sich gut in wässrigen Zusammensetzungen dispergieren lassen.

Das erfindungsgemäße Verfahren wird vorzugsweise in Gegenwart eines Katalysators durchgeführt. Nach einer bevorzugten Ausführungsform kann der Katalysator ein Metallcarboxylat, wie Dibutylzinndilaurat oder Zinkoctat, oder auch eine metallfreie Base wie z. B. Triethylamin oder Diazabicyclooctan sein. Der Katalysator kann in Mengen von 1 % bis 0,0001 Gew.-% zugesetzt werden.sein.

Die C-H-azide Verbindung der Formel (III) ist insbesondere eine Verbindung mit einer Esterfunktion -COOR⁵, wobei Ester mit R⁵ = Alkyl, Aryl bevorzugt und Ester mit R⁵ = -CH₃, -C₂H₅, -C₃H₇ besonders bevorzugt sind. Bevorzugt sind auch C-H-azide Verbindungen mit Esterfunktion COOR⁵, bei der die Einheit OR⁵ aus Alkoholen HOR⁵ stammt und bevorzugt R⁵ = E ist, wobei der entsprechende Alkohol E-OH ein Hydrophilierungsmittel E mit OH-Funktion ist. Des Weiteren ist es bevorzugt, wenn zur Herstellung wässriger Zusammensetzungen R⁵ Methyl ist und R' Methyl oder Ethyl oder R⁵ Methyl oder Ethyl ist und R' Methyl. Zur Herstellung wässriger Systeme kann es ggf. nicht zweckmäßig sein R⁵ aus Alkyl mit 2 bis 10 C-Atomen, wie Ethyl, in Kombination mit R' aus Alkyl mit 2 bis 10 C-Atomen, wie Ethyl, auszuwählen, insbesondere wenn nicht optional weitere externe Emulgatoren zugegen sind.

Beispiele für geeignete nicht-ionische Hydrophilierungsmittel E mit OH-Funktion sind Polyalkylenoxidpolyetheralkohole, wie sie in an sich bekannter Weise durch Alkoxylierung geeigneter Startermoleküle zugänglich sind. Als Startermolekül für Polyalkylenoxidpolyetheralkohole können beliebige einwertige Alkohole mit einem Molekulargewicht im Bereich von 32 bis 150 eingesetzt werden. Besonders bevorzugt wird Methanol als Startermolekül verwendet. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Bei den Polyalkylenoxidpolyetheralkoholen handelt es sich entweder um reine Polyethylenoxidpolyether oder um gemischte Polyalkylenoxidpolyether, deren Alkylenoxideinheiten zu mindestens 70 Mol-%, vorzugsweise zu mindestens 80 Mol-% aus Ethylenoxideinheiten bestehen.

Beispiele für die beim erfindungsgemäßen Verfahren eingesetzten Hydrophilierungsmittel E mit OH-Funktion umfassend Polyalkylenoxidpolyetheralkohole sind Polyglykol M350, M350 PU (niedrigerer Wassergehalt als M350), M500, M500 PU, M750, M1000 der Firma Clariant (jeweils lineare, mono hydroxy-funktionelle Polyethylenglycol- Monomethylether mit einer Molmasse von 350 g/mol, 500 g/mol, 750 g/mol bzw. 1000 g/mol). Bevorzugt werden lineare, mono hydroxy-funktionelle Polyethylenglycol Monomethylether mit einer Molmasse von 350 g/mol und 500 g/mol eingesetzt.

In einer besonders bevorzugten Ausführungsform der vorliegenden Erfindung ist die organofunktionelle C-H-azide Verbindung der Formel (III) ein β-Di-Ester, beispielsweise ein Malonsäureester, ein cyclisches β-Di-Keton, ein β-Ketoester und/oder ein β-Amidester. Die organofunktionelle C-H-azide Verbindung der Formel (III) ist insbesondere ein Malonsäureester oder ein β-Ketoester. Besonders bevorzugte organofunktionelle C-H-azide Verbindungen der Formel (III) sind ausgewählt aus 1,3-Cyclohexandion, Dimedon, Malonsäurediester, Acetoacetyessigester sowie Derivaten davon mit Polyethern.

Bevorzugt wird als das mindestens eine Isocyanatoalkylalkoxysilan der Formel (II) eine Verbindung eingesetzt, in der R jeweils unabhängig voneinander einem linearen Alkylenrest mit 1 bis 4 C-Atomen entspricht, und R' jeweils unabhängig voneinander Methyl oder Ethyl, vorzugsweise Methyl ist. Bevorzugte Isocyanatoalkyltrialkoxysilane der Formel (II) sind Isocyanatomethyltrimethoxysilan, Isocyanatomethyltriethoxysilan, Isocyanatomethyltriisopropoxysilan, 2-Isocyanatoethyltrimethoxysilan, 2-Isocyanatoethyltriethoxysilan, 2-Isocyanatoethyltri-iso-propoxysilan, 3-Isocyanato-n-propyltrimethoxysilan, 3-Isocyanato-n-propyltriethoxysilan, 3-Isocyanato-n-propyltri-iso-propoxysilan, 4-Isocyanato-n-butyltrimethoxysilan, 4-Isocyanato-n-butyltriethoxysilan und 4-Isocyanato-n-butyltri-iso-propoxysilan. Weiterhin bevorzugt sind die Isocyanatoalkylalkoxysilane der Formel (II) ausgewählt aus Isocyanatopropltriethoxysilan und Isocyanatopropyltrimethoxysilan, besonders bevorzugt ist das Isocyanatoalkylalkoxysilan der Formel (II) Isocyanatopropltrimethoxysilan.

Die Umsetzung vorzugsweise von Isocyanatoalkylalkoxysilan der Formel (II) mit der organofunktionellen C-H-aziden Verbindung der Formel (III) erfolgt vorzugsweise im molaren Verhältnis von 1,1 : 1 bis 100 : 1. Bevorzugt ist ein molares Verhältnis von 10 : 1 bis 1 : 1, besonders bevorzugt von 5:1 bis 1,5 : 1.

Die Umsetzung kann bei 20 bis 200 °C, bevorzugt 40 bis 100 °C erfolgen. Die Umsetzung kann durchgeführt werden bis die theoretische NCO-Zahl entsprechend der molaren Umsetzung von zwei aziden Wasserstoffatomen der eingesetzten C-H-aziden Verbindung der Formel (III) mit dem eingesetzten Isocyanatoalkylalkoxysilan der Formel (II) erreicht ist. Die theoretische NCO-Zahl ergibt sich aus der eingesetzten molaren Menge an Isocyanatoalkylalkoxysilan der Formel (II), die im Idealfall im molaren Verhältnis von 2 : 1 mit den C-H-aziden Verbindungen reagiert. Die theoretische NCO-Zahl ist auf die Gesamtzusammensetzung in Gew.-% bezogen.

Generell kann die Umsetzung von Isocyanatoalkylalkoxysilan der Formel (II) und der CH-aziden Verbindung der Formel (III) in Gegenwart eines inerten Lösemittels oder ohne inertes Lösemittel erfolgen. Bevorzugt erfolgt die Umsetzung ohne Zugabe eines inerten Lösemittels. In dem Verfahren werden dazu das Isocyanatoalkylalkoxysilan der Formel (II) und die C-H-azide Verbindung der Formel (III) in geeigneten Aggregaten gemischt und solange die Reaktionstemperatur von 20 bis 220 °C, bevorzugt 40 bis 100 °C gehalten, bis die theoretische NCO-Zahl (entsprechend der vollständigen Reaktion von beiden aziden Wasserstoffatomen der Verbindungen der Formel (III)) erreicht wird.

In bevorzugten Ausführungsvarianten können zusätzlich die nachfolgenden Schritte erfolgen:
(ii) Abtrennen von überschüssigem Isocyanatoalkylalkoxysilan der Formel (II), oder Umsetzen von Isocyanatoalkylalkoxysilan der Formel (II) mit einer Hydroxy-funktionellen Kohlenwasserstoff-Verbindung, und
(iii) Erhalten einer Verbindung der Formel (I) oder einer Zusammensetzung umfassend mindestens einen Vernetzer der allgemeinen Formel (I) oder eine Mischung von mindesten zwei der Vernetzer der Formel (I). Optional kann die Verbindung der Formel (I) oder eine Mischung der Formeln I abgetrennt werden, beispielsweise destillativ.

Im Schritt (ii) kann optional ein Katalysator ausgewählt aus metallorganischen Salzen, insbesondere von Carbonsäuren und/oder Alkoholen, wie beispielsweise Metallcarboxylaten und/oder Metallalkoholaten, insbesondere Zinkethylhexanoat und/oder Octylglycoltitanat eingesetzt werden.

Die Abtrennung von überschüssigem Isocyanatoalkylalkoxysilan der Formel (II) in Schritt (ii): Nach einer Umsetzung, bei der Isocyanatoalkylalkoxysilan der Formel (II) im Überschuss eingesetzt wurde, kann die abgekühlte Zusammensetzung optional weiter behandelt werden, indem optional vorhandenes Lösemittel sowie der Überschuss an monomeren Isocyanatoalkylalkoxysilan der Formel (II) abgetrennt werden, insbesondere bis ein Gehalt an Monomer von kleiner 2,0 Gew.-% vorliegt. Dies geschieht bevorzugt durch eine schonende Destillation, z. B. Kurzwegdestillation oder Dünnschichtdestillation, bevorzugt bei Temperaturen von 100 bis 220 °C und Drücken von 0,001 mbar bis 100 mbar, insbesondere von 0,001 mbar bis 50 mbar. Bevorzugt ist eine Kurzwegdestillation oder Dünnschichtdestillation bei Temperaturen von 100 bis 180 °C und Drücken von 0,001 mbar bis 50 mbar, vorzugweise bei Drücken von 0,01 mbar bis 20 mbar. Die so erhaltenen Zusammensetzungen, umfassend den erfindungsgemäßen Vernetzer nach Formel (I), haben einen Monomergehalt von < 2 Gew.-%, bevorzugt < 1 Gew.-% und besonders bevorzugt < 0,5 Gew.-%.

Die Umsetzung von Isocyanatoalkylalkoxysilan der Formel (II) mit einer Hydroxy-funktionellen Kohlenwasserstoff-Verbindung: Wird das Isocyanatoalkylalkoxysilan der Formel (II) im Molverhältnis 2 : 1 mit der C-H-aziden Verbindung eingesetzt und erfolgt die Umsetzung nicht vollständig (wird also kein NCO-Gehalt von 0 Gew.-% NCO erreicht) so können Restmengen an NCO-Gruppen aus der Verbindung der Formel (II) mit einer Hydroxy-funktionellen Kohlenwasserstoff-Verbindung, insbesondere einem Alkohol, in einem Verhältnis von NCO-Gruppen zu den OH-Gruppen der Hyxdroxy-funktionellen Kohlenwasserstoff-Verbindung, insbesondere des Alkohols, von 0,8 : 1 bis 1,2 : 1, bevorzugt von 0,9 : 1 bis 1,1 : 1 umgesetzt werden, insbesondere zum entsprechenden Urethan. Die stöchiometrische Umsetzung, d. h. ein Verhältnis von NCO-Gruppen zu den OH-Gruppen der Hyxdroxy-funktionellen Kohlenwasserstoff-Verbindung von 1:1 ist besonders bevorzugt. Weiterhin bevorzugt erfolgt die Umsetzung der Restmenge an NCO-Gruppen aus der Verbindung der Formel (II) mit einem Alkohol bei Temperaturen im Bereich 30 - 150 °C, insbesondere im Bereich von 50 bis 150 °C. Die Reaktion wird insbesondere unter Ausschluss von Wasser durchgeführt. Bevorzugt wird die Reaktion lösemittelfrei durchgeführt.

Bevorzugte Hydroxy-funktionellen Kohlenwasserstoff-Verbindungen sind Alkohole, insbesondere lineare oder verzweigte Alkohole, deren Hydroxy-Funktion an einem primären, sekundären oder tertiären Kohlenstoffatom gebunden ist, eingesetzt. Auch Diole oder Polyole können eingesetzt werden. Besonders bevorzugt sind Methanol, Ethanol, Propanol, Isopropanol, 1-Butanol, 2-Butanol, Pentanol, Ethyl-2-hexanol, 1-Hexanol. Ganz besonders bevorzugt sind Ethanol, Propanol und 1-Butanol.

Bevorzugt umfasst die erfindungsgemäße Zusammensetzung also Reaktionsprodukte von Isocyanatoalkylalkoxsilanen der Formel (II) mit einer C-H-aziden Verbindung der Formel (III) und optional überschüssige Verbindungen der Formel (III). Optional umfasst die erfindungsgemäße Zusammensetzung zusätzlich Umsetzungsprodukte von Isocyanatoalkylalkoxsilanen der Formel (II) mit einer Hydroxy-funktionellen Kohlenwasserstoffverbindung, insbesondere die entsprechenden Urethane.

Der mindestens eine erfindungsgemäße Vernetzer der allgemeinen Formel (I) oder eine Mischung von mindestens zwei der Vernetzer der Formel (I) sind vorzugsweise niedrigviskos und können insbesondere eine Viskosität von kleiner 1000 mPas aufweisen, vorzugsweise von 20 mPas bis kleiner 1000 mPas, bevorzugt kleiner 500 mPas, besonders bevorzugt kleiner 100 mPas. Gleichfalls ist es bevorzugt, wenn eine Mischung der vorgenannten Vernetzer eine entsprechende Viskosität von kleiner 1000 mPas aufweist, insbesondere von 20 mPas bis kleiner 1000 mPas. Die Bestimmung der Viskosität kann nach DIN EN ISO 3219 vom 01.10.1994 bei 23°C +/- 0,2 °C an den Geräten "Anton Paar MCR 301" oder "Anton Paar MCR 302" durchgeführt werden.

In einer bevorzugten Ausführungsform können die erfindungsgemäßen Zusammensetzungen insbesondere zusätzlich
(iii) optional mindestens ein Bindemittel oder eine Mischung von mindestens zwei Bindemitteln,
(iv) optional bis zu 4 Gew.-% mindestens eines Katalysators,
(v) optional organische Lösemittel, und
(vi) optional Hilfs- und/oder Zusatzstoffe umfassen.

Entsprechende Zusammensetzungen können insgesamt
(i) 1 bis 20 Gew.-% mindestens eines hydrophilen Vernetzer der Formel (I) oder Mischungen von mindestens zwei der vorgenannten Vernetzer, und optional Umsetzungsprodukte von Isocyanatoalkylalkoxsilanen der Formel (II) mit einer Hydroxy-funktionellen Kohlenwasserstoffverbindung, und optional der Formel (III),
(ii) 0,01 bis 50 Gew.-%, insbesondere 5 bis 50 Gew.-% Wasser,
(iii) 0 bis 30 Gew-%, insbesondere 0,5 bis 30 Gew.-% eines Bindemittels oder einer Mischung von mindestens zwei Bindemitteln, vorzugsweise umfassend Polyurethane,
(iv) 0 bis 4 Gew.-%, insbesondere 0,01 bis 1 Gew.-% mindestens eines Katalysators,
(v) 0 bis 30 Gew.-% eines organischen Lösemittels, und
(vi) 0 bis 10 Gew.-% Hilfs- und/oder Zusatzstoffe
umfassen, wobei die Gesamtzusammensetzung 100 Gew.-% beträgt. Das R' in Formel I, Ia und/oder Ib entspricht vorzugsweise jeweils unabhängig voneinander einem linearen, verzweigten oder cyclischen Alkylrest mit 1 bis 10 C-Atomen oder einem H. Je nach Wassergehalt liegt der hydrophile Vernetzer mehr oder weniger hydrolysiert vor. Die Komponenten (i) bis (vi) ergänzen sich immer auf 100 Gew.-%.

Ebenso Gegenstand der Erfindung ist eine Bindemittelzusammensetzung, insbesondere ein Beschichtungsmittel, umfassend
(i) eine Zusammensetzung, umfassend oder bestehend aus einen/einem Vernetzer der Formel (I) oder eine Mischung von mindestens zwei Vernetzern der Formel (I),
(ii) optional organische Lösemittel,
(iii) ein oder mehrere Bindemittel,
(iv) optional bis zu 4 Gew.-% mindestens eines Katalysators,
(v) optional Hilfs- und/oder Zusatzstoffe,
(vi) optional Wasser.

Diese Zusammensetzungen können als Beschichtungsmittel verwendet werden, welche vorzugsweise bei Temperaturen von 80 bis 180 °C härtbar sind.

Der Anteil der erfindungsgemäßen Vernetzer als Komponente (i) in der erfindungsgemäßen Bindemittelzusammensetzung, insbesondere dem Beschichtungsmittel beträgt bevorzugt 20 bis 80 Gew.-% bezogen auf das Beschichtungsmittel.

Weiterhin kann die erfindungsgemäße Bindemittelzusammensetzung, insbesondere das Beschichtungsmittel organische (ii) Lösemittel enthalten. Geeignete organische Lösemittel sind z. B. Ketone, Ester oder Alkohole.

Die (ii) Lösemittel können vorzugsweise in einer Menge von 10 bis zu 50 Gew.-% bezogen auf die Gesamtzusammensetzung von 100 Gew.-% enthalten sein, insbesondere in dem erfindungsgemäßen Beschichtungsmittel. Die Menge des organischen Lösemittels oder einer Mischung davon orientiert sich an der einzustellenden Applikationsviskosität des Beschichtungsmittels.

Weiterhin enthält die erfindungsgemäße Bindemittelzusammensetzung, insbesondere das Beschichtungsmittel ein oder mehrere Bindemittel (iii). Grundsätzlich eignen sich als Bindemittel alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel, die über reaktive funktionelle Gruppen mit aciden Wasserstoffatomen verfügen, eingesetzt. Geeignete Bindemittel der genannten Art weisen beispielsweise mindestens eine, bevorzugt jedoch zwei oder mehr Hydroxylgruppen auf. Weitere geeignete funktionelle Gruppen des Bindemittels sind beispielsweise Trialkoxysilan-Funktionalitäten.

Besonders bevorzugt werden die hydrophilen Vernetzer der Formel (I) als Vernetzer für das Bindemittel, welche in Wasser gelöste oder dispergierte Lackbindemittel oder Lackbindemittelkomponenten mit Hydroxyl-Gruppen sind, und bei der Herstellung von Beschichtungen verwendet. Die Vereinigung des Vernetzers der Formel (I), gegebenenfalls in emulgierter Form, mit dem einen oder mehreren Bindemitteln kann hierbei durch einfaches Verrühren vor der Verarbeitung der Beschichtungsmittel nach beliebigen Methoden, durch Verwendung von dem Fachmann bekannten mechanischen Hilfsmitteln oder auch unter Verwendung von Zweikomponenten-Spritzpistolen erfolgen.

In diesem Zusammenhang seien als Bindemittel, insbesondere Lackbindemittel oder Lackbindemittelkomponenten beispielhaft die folgenden erwähnt: In Wasser gelöste oder dispergierte, Hydroxylgruppen aufweisende Polyacrylate, insbesondere solche mit einem Molekulargewicht im Bereich von 1000 bis 10000, die mit Alkoxysilan-funktionalisierten hydrophilen Vernetzern der Formel (I) als Vernetzer wertvolle Zweikomponenten-Bindemittel darstellen oder in Wasser dispergierte, gegebenenfalls Urethan modifizierte, Hydroxylgruppen aufweisende Polyesterharze der aus der Polyester- und Alkydharzchemie bekannten Art. Prinzipiell sind als Reaktionspartner für die erfindungsgemäßen hydrophilen Vernetzer der Formel (I) alle in Wasser gelösten oder dispergierten Bindemittel, die OH-Gruppen aufweisen, geeignet.

Als Bindemittel mit funktionellen Gruppen werden bevorzugt Hydroxylgruppen-haltige Polymere, insbesondere Hydroxylgruppen-haltige Polyester, Polyether, Poly(meth)-acrylate, Polycarbonate und Polyurethane mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Poly(meth)acrylate mit einer OH-Zahl von 20 bis 150 mg KOH/g und einem mittleren Molekulargewicht von 500 bis 6000 g/mol als Bindemittelkomponenten eingesetzt. Unter Poly(meth)acrylaten sind dabei sowohl Polyacrylate als auch Polymethacrylate zu verstehen. Die Hydroxylzahl (OHZ) wird bestimmt nach DIN 53240-2 (11/2007). Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt. Das Molekulargewicht wird bestimmt mittels Gelpermeationschromatographie (GPC). Die Charakterisierung der Proben erfolgte in Tetrahydrofuran als Eluent nach DIN 55672-1 (08/2007).

Als hydroxylgruppenhaltige (Meth)acryl-Copolymerisate können Harze mit einer Monomerzusammensetzung, wie sie z. B. in WO 93/15849 beschrieben sind, verwendet werden. Dabei sollte die durch anteilige Verwendung von (Meth)acrylsäure als Monomer einzustellende Säurezahl des (Meth)acryl-Copolymerisates 0 bis 30, vorzugsweise 3 bis 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 - 20000 g/mol, die Glasübergangstemperatur beträgt vorzugsweise -40 °C bis +60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70 bis 250 mg KOH/g, besonders bevorzugt 90 bis 190 mg KOH/g.

Erfindungsgemäß geeignete Polyesterpolyole sind Harze mit einer Monomerzusammen-setzung aus Di- und Polycarbonsäuren und Di- und Polyolen. Als Polyesterpolyole können auch Polyadditionsprodukte von Caprolacton an niedermolekulare Di- und Triole, wie sie z. B. unter der Bezeichnung CAPA (Perstorp) erhältlich sind, eingesetzt werden. Das rechnerisch bestimmte zahlenmittlere Molgewicht beträgt vorzugsweise 500 bis 5000 g/mol, besonders bevorzugt 800 bis 3000 g/mol, die mittlere Funktionalität beträgt vorzugsweise 2,0 bis 4,0, bevorzugt 2,0 bis 3,5.

Als erfindungsgemäß zu verwendende Urethan- und Ester-Gruppen-haltige Polyole können Urethan- und Ester-Gruppen-haltige Polyole eingesetzt werden, zu deren Herstellung HDI, IPDI, Trimethylhexamethylendiisocyanat (TMDI) oder H₁₂-MDI verwendet werden. Das zahlenmittlere Molgewicht beträgt vorzugsweise 500 bis 2000 g/mol, die mittlere Funktionalität liegt insbesondere im Bereich von 2,0 bis 3,5.

Auch Trialkoxysilan-funktionelle Bindemittel eignen sich zur Verwendung als Bindemittel. Derartige Harze können gewonnen werden durch Copolymerisation von Acrylat- oder Methacrylat-Monomeren mit acryl- oder methacryl-funktionellen Alkyl-Trialkoxysilan-Derivaten. Ein alternativer Syntheseweg besteht in der Derivatisierung von hydroxylgruppenhaltigen Polyethern, Polyestern, Polycarbonat-diolen oder Polyacrylaten mit Isocyanatopropyltrialkoxysilan.

Selbstverständlich können auch Mischungen der vorab beschriebenen Bindemittel eingesetzt werden. Bevorzugte Bindemittel sind Hydroxylgruppen-haltige Polyester und Polyacrylate, allein oder in Mischungen.

Der Anteil der Bindemittel (iii) in der erfindungsgemäßen Bindemittelzusammensetzung, insbesondere dem Beschichtungsmittel beträgt bevorzugt 10 bis 80 Gew.-%, insbesondere 20 bis 80 Gew.-% bezogen auf die Gesamtzusammensetzung.

Das Massenverhältnis der Komponente (i) zu der Komponente (iii) beträgt in der erfindungsgemäßen Bindemittelzusammensetzung, insbesondere dem Beschichtungsmittel vorzugsweise 3 : 7 bis 7 : 3.

Zur Erzielung einer ausreichenden Aushärtungsgeschwindigkeit bei Aushärtungstemperaturen von weniger als 100 °C werden vorzugsweise Katalysatoren (iv) eingesetzt. Geeignete Katalysatoren sind insbesondere Lewis-Säuren, Metall- oder Übergangsmetallchelate, -Salze oder -Partikel, beispielsweise auf Basis von Titan-, Aluminium-, Zinn- oder Zirkoniumkomplexen, Sulfonsäuren in freier aber auch neutralisierter oder adduktierter Form, Phosphorsäure oder phosphorige Säuren und deren Derivate, hoch siedende Säuren, quarternäre Ammoniumcarboxylate oder auch Kombinationen der genannten Verbindungen. Bevorzugt werden Übergangsmetallchelate odersalze, hoch siedende Säuren, quarternäre Ammoniumcarboxylate oder Kombinationen der genannten Verbindungen eingesetzt.

Besonders bevorzugt ist der Katalysator ausgewählt aus der Gruppe C1) der organischen Carbonsäuren mit einem Schmelzpunkt oberhalb von 60 °C und/oder der Gruppe C2) der Tetraalkylammoniumcarboxylate.

Geeignete organische Carbonsäuren C1) mit einem Schmelzpunkt oberhalb von 60 °C (bei Normaldruck) sind bei Raumtemperatur nicht flüchtige Verbindungen. Beispiele vorteilhaft einzusetzender Carbonsäuren sind Salicylsäure, Benzoesäure, Citronensäure, Isophthalsäure, Phthalsäure, Terephthalsäure und/oder Trimellithsäure. Bevorzugt werden im Rahmen der vorliegenden Erfindung Salicylsäure und Benzoesäure verwendet.

Zur Gruppe der Tetraalkylammoniumcarboxylate C2), die als Katalysator eingesetzt werden können, gehören insbesondere Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und/oder Tetrabutylammoniumbenzoat. Die genannten Tetraalkylammoniumcarboxylate können allein oder in Mischungen zugesetzt werden. Bevorzugt werden Tetraethylammoniumbenzoat und/oder Tetrabutylammoniumbenzoat eingesetzt.

Der Katalysator in den erfindungsgemäßen Bindemittelzusammensetzungen, die als Beschichtungsmitteln verwendet werden können, kann allein aus einer oder mehreren Verbindungen der vorgenannten Gruppen C1) oder C2) bestehen, es können aber auch beliebige Mischungen der Katalysatoren aus den Gruppen C1) und C2) eingesetzt werden. Derartige Mischungen aus C1) und C2) weisen insbesondere ein Verhältnis von 9 : 1 bis 1 : 9 (m/m) auf. Vorzugsweise beträgt der Anteil des Katalysators bis zu 4 Gew.-%, bezogen auf das Beschichtungsmittel, vorzugsweise 0,1 bis 4 Gew.-%.

Die erfindungsgemäße Bindemittelzusammensetzung, die als Beschichtungsmittel verwendet werden kann, kann zusätzlich in der Lacktechnologie bekannte (v) Hilfsstoffe und/oder Zusatzstoffe, wie Stabilisatoren, Lichtschutzmittel, Katalysatoren, Füllstoffe, Pigmente, Verlaufsmittel oder Rheologiehilfsmittel, wie z. B. sog. "sag control agents", Mikrogele oder pyrogenes Siliciumdioxid, in typischen Konzentrationen enthalten. Falls erforderlich, können als Hilfsstoffe und/oder Zusatzstoffe auch in der Lacktechnologie übliche anorganische oder organische Farb- und/oder Effektpigmente eingearbeitet werden.

Die Hilfsstoffe und/oder Zusatzstoffe sind im Falle von pigmentfreien Zusammensetzungen, insbesondere Beschichtungsmitteln, d.h. Klarlacken, vorzugsweise in Mengen von 0,5 bis zu 8 Gew.-%, insbesondere von 1 bis 6 %, bezogen auf die Gesamtzusammensetzung von 100 Gew.-%, insbesondere bezogen auf das Beschichtungsmittel, enthalten. Im Falle von pigment- und/oder füllstoffhaltigen Beschichtungsmitteln kann der Gehalt von (v) Hilfsstoffen und/oder Zusatzstoffen 5 bis 80 Gew.-%, insbesondere 10 bis 70 Gew.-% in der Gesamtzusammensetzung von 100 Gew.-% betragen, insbesondere bezogen auf das Beschichtungsmittel.

Die Summe aller Anteile der Komponenten (i), (ii), (iii), (iv), (v) und/oder (vi) beträgt 100 Gew.-%. Bevorzugt bestehen die erfindungsgemäßen Bindemittelzusammensetzungen, insbesondere die Beschichtungsmittel aus den genannten Komponenten (i) bis (vi).

Die Vernetzer der Formel (I), die Mischungen von Vernetzern der Formel (I) oder die erfindungsgemäßen Zusammensetzungen können bevorzugt verwendet werden als Lackbindemittelkomponente, in Beschichtungsmitteln, insbesondere in organische Lösemittel enthaltenden Beschichtungsmitteln, in wasserlöslichen oder in wasserdispergierbaren Lackbindemitteln oder als Lackbindemittel-Komponenten, insbesondere als eine Komponente eines 2K-Polyurethan-Systems, in einem wasserlöslichen oder in wasserdispergierbaren Beschichtungsmittel oder einer Beschichtungsmittel-Komponente, zur Herstellung von Polyurethan- und/oder Acrylat-Kunststoffen, oder mit blockierten Polyisocyanaten, in wässrigen Einkomponenten-Polyurethan-Einbrennsystemen (1K-PUR).

Die Zusammensetzungen können weiterhin verwendet werden zur Behandlung von Substraten basierend auf Metallen, Legierungen, Holz, Glas, Stein, keramischen Materialien, Hybridmaterialen, Beton, harten Kunststoffen, flexiblen Kunststoffen, Textilien, Leder und/oder Papier, die vor der Beschichtung gegebenenfalls auch mit üblichen Grundierungen versehen werden können.

Die erfindungsgemäßen Vernetzer werden in vorteilhafter Weise als niedrigviskose vernetzende Komponente für harte und chemikalienbeständige Beschichtungen verwendet. Dabei werden sie zur Optimierung der Lackmechanik mit polymeren Bindemitteln, die auch vernetzbare funktionelle Gruppen tragen können, abgemischt. Die Reaktivität der erfindungsgemäßen Vernetzer kann jedoch für eine Aushärtungsgeschwindigkeit bei Umgebungstemperatur nicht ausreichend sein. Zur Steigerung der Vernetzungsgeschwindigkeit können daher vorzugsweise Katalysatoren zugesetzt und/oder die Aushärtung bei Temperaturen oberhalb Umgebungstemperatur durchgeführt werden.

Hierzu eignen sich Metall- oder Übergangsmetallchelate, -Salze oder -Partikel, beispielsweise auf Basis von Titan-, Aluminium-, Zinn- oder Zirkoniumkomplexen, Sulfonsäuren, Phosphorsäuren oder phosphorigen Säuren und deren Derivaten, Carbonsäuren mit Schmelzpunkten oberhalb von 60 °C, quarternäre Ammonium-carboxylate oder auch Kombinationen der genannten Verbindungen.

Die Zusammensetzungen umfassend Vernetzer der Formel (I), ein Verfahren zur Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnehmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

### Einsatzstoffe:

Vestanat® EP-M95, Isocyanatopropyl-trimethoxysilan-Addukt mit mehrwertigem Alkohol, Evonik Resource Efficiency GmbH
Setalux 1760 VB-64: Polyacrylatpolyol, Nuplex Resins B.V.
Tego Glide 410: Gleit- und Antiblocking-Additiv, Polyethersiloxan-Copolymer (Evonik Resource Efficiency GmbH)
Vestanat® EP Cat 11 B: Tetraethylammoniumbenzoat in Butanol (Evonik Resource Efficiency GmbH)
Vestanat® HB 2640/100: Polyisocyanat auf Basis von HDI-Biuret (Evonik Resource Efficiency GmbH)
Bona Traffic HD: Bindemittelkomponente der 2-Komponentigen Polyurethan-Dispersion in Wasser (Bona Vertriebsgesellschaft mbH Deutschland, ca. 32 Gew.-% Feststoffgehalt)
Bona Traffic Hardener: hydrophiles, aliphatisches Polyisocyanat, als Härterkomponente für Bona Traffic HD (Bona Vertriebsgesellschaft mbH Deutschland)
Polyglykol M500 PU: linearer, mono hydroxy-functioneller Polyethylenglycol Monomethylether (Clariant International Ltd.)
Vestanat® EP Cat 11 H: Tetraethylammoniumbenzoat in Butanol (Evonik Resource Efficiency GmbH)

Viskosität: DIN EN ISO 3219 (vom 01.10.1994) bei 23°C +/- 0,2 °C, Gerät: Anton Paar MCR 301 oder Anton Paar MCR 302. Es können Viskositäten von 20 - 200.000 mPas gemessen werden.

### 1. Herstellung Vernetzer

### Beispiel 1: Vernetzer V1

In einem Dreihalskolben mit Rückflusskühler wurden 214,4 g Isocyanatopropyltrimethoxysilan (IPMS), 82,6 g Diethylmalonat und 3,0 g Zink-ethylhexanoat vorgelegt und mit Stickstoff abgedeckt. Unter Rühren wurde auf 125 °C und dann innerhalb von 7 h kontinuierlich auf 70 °C abgekühlt. Bei 70 °C wurde weitere 17 h gerührt bis ein NCO-Gehalt von 2,63 Gew.-% erreicht wurde. Dann wurden 14,7 g Butanol und 0,01% DBTL hinzugefügt und 10h bei 60 °C erhitzt, bis ein NCO-Gehalt von < 0,1 Gew.-% NCO erreicht wurde. Nach Abkühlen auf Raumtemperatur erhält man den erfindungsgemäßen hydrophilen Vernetzer V1 als klare, gelbe Flüssigkeit mit einer Viskosität von 53 mPas (bei 23 °C).

### Beispiel 2: Vernetzer V2

In einem Dreihalskolben mit Rückflusskühler wurden 450,5 g Isocyanatopropyltrimethoxysilan (IPMS), 345,5 g Diethylmalonat und 4,0 g Zink-ethylhexanoat vorgelegt und mit Stickstoff abgedeckt. Es wurde unter Rühren auf 60 °C erhitzt und bis nach 60 h ein NCO-Gehalt von < 0,1 Gew.-% NCO erreicht wurde. Nach Abkühlen auf Raumtemperatur erhält man den erfindungsgemäße Vernetzer V2 als klare, gelbe Flüssigkeit mit einer Viskosität von 62 mPas (bei 23 °C).

### Beispiel 3 (Vergleich) Vernetzer VG1

In einem Dreihalskolben mit Rückflusskühler wurden 312,1 g Isocyanatopropyltrimethoxysilan (IPMS), 76,9 g Acetylaceton und 2,0 g Zink-ethylhexanoat vorgelegt und mit Stickstoff abgedeckt. Es wurde unter Rühren auf 80°C erhitzt und bis nach 60 h ein NCO-Gehalt von < 0,1 Gew.-% NCO erreicht wurde. Nach Abkühlen auf Raumtemperatur erhält man den Vernetzer VG1 als klare, braune Flüssigkeit mit einer Viskosität von 181 mPas (bei 23 °C).

### Beispiel 4: hydrophiler Vernetzer V4

Stufe 1 (hydrophiles Malonat): In einer Apparatur mit Destillationsbrücke und dauerhafter Stickstoffspülung wurden 59,9 g Diethylmalonat, 180,7 g Polyglykol M500 und 0,048 g Octylglycoltitanat (OGT) vorgelegt. Unter Rühren wurde auf 100 - 120°C aufgeheizt bis sich 17 g Ethanol in der Destillatvorlage gesammelt haben. Bei dem im Sumpf verbliebenen Produkt handelt es sich um 223,4 g des hydrophilen Malonats, welches in der folgenden Stufe weiter umgesetzt wird.

Stufe 2: In einem Dreihalskolben mit Rückflusskühler wurden 155,4 g Isocyanatopropyl-trimethoxysilan (IPMS), 223,4 g hydrophiles Malonat aus Stufe 1 und 4,0 g Zink-ethylhexanoat vorgelegt und mit Stickstoff abgedeckt. Unter Rühren wurde auf 125 °C und dann innerhalb von 7 h kontinuierlich auf 70°C abgekühlt. Bei 70°C wurde weitere 17 h gerührt bis ein NCO-Gehalt von 0,64% erreicht wurde. Dann wurden 4,0 g Butanol und 0,36 g DBTL hinzugefügt und 10h bei 60 °C erhitzt, bis ein NCO-Gehalt von < 0,1 Gew.-% NCO erreicht wurde. Nach Abkühlen auf Raumtemperatur erhält man den erfindungsgemäße hydrophiler Vernetzer V4 als klare, gelbe Flüssigkeit mit einer Viskosität von 95 mPas (bei 23 °C).

### Beispiel 5: hydrophiler Vernetzer V5

In einem Dreihalskolben mit Rückflusskühler wurden 76,0 g Isocyanatopropyltriethoxysilan (IPES), 23,5 g Diethylmalonat und 0,5 g Zink-ethylhexanoat vorgelegt und mit Stickstoff abgedeckt. Unter Rühren wurde für 5 h auf 80 °C erhitzt und danach auf Raumtemperatur abgekühlt. Bei Raumtemperatur wurde der Ansatz 4 Tage stehengelassen bis ein NCO-Gehalt von < 0,4 Gew.-% NCO erreicht wurde. Der so erhaltene erfindungsgemäße hydrophiler Vernetzer V5 ist eine klare, gelbe Flüssigkeit mit einer Viskosität von 67 mPas (bei 23 °C).

### Beispiel 6: hydrophiler Vernetzer V6

In einem Dreihalskolben mit Rückflusskühler wurden 303,5 g Isocyanatopropyltrimethoxysilan (IPMS), 95,5 g Ethylacetoacetat und 2,0 g Zink-ethylhexanoat vorgelegt und mit Stickstoff abgedeckt. Unter Rühren wurde für 20 Tage auf 60 °C erhitzt bis ein NCO-Gehalt von < 0,4 Gew.-% NCO erreicht wurde. Nach Abkühlen auf Raumtemperatur erhält man den erfindungsgemäßen hydrophilen Vernetzer V4 als klare, braune Flüssigkeit mit einer Viskosität von 64 mPas (bei 23 °C).

### 2. Viskosität im Vergleich zum Stand der Technik

In Tabelle 1 sind die Viskositäten der erfindungsgemäßen Vernetzern V1 und V2 im Vergleich zu Vernetzer VG1 und Vestanat HB 2640/100 gegenübergestellt, welches ein Polyisocyanat auf Basis von HDI-Biuret ist.

**Tabelle 1: Viskosität (bei 23 °C)**

| | Viskosität (23 °C) |
|---|---|
| Erfindungsgemäßer Vernetzer V1 | 53 mPas |
| Erfindungsgemäßer Vernetzer V2 | 62 mPas |
| Vergleichsbeispiel Vernetzer VG1 | 181 mPas |
| Vestanat HB 2640/100 | 10000 mPas |

Der nicht erfindungsgemäße Vernetzer VG1 besitzt eine um den Faktor 3 und das nicht erfindungsgemäße Vestanat HB 2640/100 eine um den Faktor 200 höhere Viskosität als die erfindungsgemäßen niedrigviskosen Vernetzer V1 und V2.

### 3. Herstellung von Beschichtungsmitteln, hier Klarlack

Für die Herstellung der Beschichtungsmittel I - IV wurden die in Tabelle 2 aufgeführten Produkte bei Raumtemperatur homogenisiert. Die Viskosität der Formulierungen betrug, bestimmt als Auslaufzeit im DIN-4-Becher bei 23 °C, ca. 20 Sekunden.

Zur Ermittlung der Lackeigenschaften wurden die Beschichtungsmittel I - IV jeweils mit einer 100 µm Rakel auf Bleche des Typs Gardobond OC26 aufgezogen und 22 min bei 140 °C getrocknet. Mit den erfindungsgemäßen Beschichtungsmitteln I - II können klebfreie, glänzende Lacke mit guter mechanischer und auch chemischer Beständigkeit erhalten werden (Tabelle 3). Zudem enthalten die erfindungsgemäßen Formulierungen I-II weniger Lösemittel als die Vergleichsbeispiele III und IV.

### 4. Herstellung eines RT-härtenden Klarlacks mittels hydrophilen Vernetzers

Für die Formulierung der erfindungsgemäßen RT-härtenden Klarlacke und der Vergleichsbeispiele wurden die Komponenten der in Tabelle 4 dargestellten Zusammensetzungen eingesetzt. Dabei wurde die Bindemittelkomponente (hier: Bona Traffic HD, enthält Wasser und Polyurethan, ca. 32 Gew.-% Feststoffanteil) in einer Flasche vorgelegt, mit dem hydrophilen Vernetzer versetzt und das Gemisch mit einem Holzspatel ca. 30 Sekunden intensiv gerührt. Es entsteht eine homogene Dispersion. Diese wird über ein 80 µm Filter filtriert und dann mit einer Schichtdicke von 15 bis35 µm auf Stahlbleche (Gardobond GB26S 60 OC) mittels 120 µm Spiralrakel aufgerakelt. Nachfolgend wird dieses beschichtete Blech nach Stehenlassen bei Raumtemperatur analytisch geprüft.

Die Viskosität der Formulierungen betrug, bestimmt als Auslaufzeit im DIN-4-Becher bei 23 °C, ca. 20 Sekunden.

Für die Bestimmung der in Tabelle 5 aufgeführten Topfzeit wurde der jeweilige Lackansatz aus Tabelle 4 zeitabhängig mittels 120 µm Spiralrakel auf eine Schwarz-Weiß-Karte appliziert und die resultierende Beschichtung beurteilt. Das Ende der Topfzeit wurde über das Auftreten von Rakelspuren definiert.

Aus Tabelle 5 geht hervor, dass die Beschichtungen aus Zusammensetzung III, IV, VI und VII, die die erfindungsgemäßen hydrophilen Vernetzer V1, V4, V6 und V2 enthalten, gute Lackeigenschaften besitzen. Insbesondere zeigen die Beschichtungen III, VI und VII sogar bessere Chemikalienbeständigkeiten (MEK-Test) als der Stand der Technik, der Beschichtung II mit dem Bona Traffic Hardener, einem hydrophilen Polyisocyanat, als Härter. Bemerkenswert ist zudem die Topfzeit von einem Tag, welche die Zusammensetzung IV mit dem hydrophilen Vernetzer V4 zeigt.

Die Zusammensetzung mit dem hydrophilen Vernetzer V5, welcher auf IPES basiert, zeigt unerwartet nicht so hervorragende Eigenschaften wie die anderen auf IPMS basierten Zusammensetzungen.

**Tabelle 2: Zusammensetzung der erfindungsgemäßen Klarlacke und Vergleichsbeispiel, Angaben in Gew.-%**

| Position | | I (V1) | II (V2) | III (Vergleich) | IV (VG1) |
|---|---|---|---|---|---|
| 1 | Erfindungsgemäßer Vernetzer V1 | 30,6 | | | |
| 2 | Erfindungsgemäßer Vernetzer V2 | | 30,6 | | |
| 3 | Vernetzer VG1 (Vergleich) | | | | 28,9 |
| | Vestanat HB 2640/100 | | | 16,3¹⁾ | |
| 5 | Setalux 1760 | 47,7 | 49,7 | 40,8 | 45,1 |
| 6 | Tego Glide 410 (10% in BA) | 0,4 | 0,4 | 0,5 | 0,4 |
| 7 | Vestanat EP Cat 11 B | 1,3 | 1,3 | | 1,5 |
| 8 | Butylacetat / Xylol-Gemisch (1:1) | 20,0 | 16,7 | 42,4 | 24,1 |

| | | | | | |
|---|---|---|---|---|---|
| 1) Vestanat HB2640/100 wurde mit Setalux 1760 im NCO/OH-Verhältnis von 1,1 : 1,0 eingesetzt. | | | | | |

**Tabelle 3: Lackeigenschaften der Zusammensetzungen I-IV nach Härtung 22 min bei 140 °C**

| Zusammensetzung | I (erfindungsgemäß) | II (erfindungsgemäß) | III (Vergleich) | IV (Vergleich) |
|---|---|---|---|---|
| Pendelhärte (König) [s] n 7 d | 164 | 146 | 189 | 176 |
| MEK-Test [ASTM D 4752] (Doppelhübe, 1 kg Auflagegewicht) | >150 | >150 | >150 | >150 |

**Tabelle 4: Zusammensetzung der erfindungsgemäßen RT-härtenden Klarlacke und Vergleichsbeispiel, Angaben in Gewichtsanteilen**

| Position | | I | II | III (V1) | IV (V4) | V (V5) | VI (V6) | VI (V2) |
|---|---|---|---|---|---|---|---|---|
| 1 | Bona Traffic HD (Bindemittelkomponente) | 100 | 90 | 90,0 | 90.0 | 89,6 | 89,6 | 89,6 |
| 2 | Bona Traffic Hardener | | 10 | | | | | |
| 3 | Beispiel V4 | | | 10,0 | | | | |
| 4 | Beispiel V5 | | | | 10,0 | | | |
| 5 | Beispiel VG1 | | | | | 9,95 | | |
| 6 | Beispiel V6 | | | | | | 9,95 | |
| 7 | Beispiel V2 | | | | | | | 9,95 |
| 8 | Vestanat EP Cat 11 H | | | | | 0,45 | 0,45 | 0,45 |

**Tabelle 5: Lackeigenschaften der Zusammensetzungen I-IV nach Härtung bei 23 °C (7 Tage)**

| Zusammensetzung | I | II | III (V1) | IV (V4) | V (V5) | VI (V6) | VII (V2) |
|---|---|---|---|---|---|---|---|
| Erichsen Tiefung [mm] (EN ISO 1520) | 8,0 | 8,0 | 7,5 | 7,5 | 8,0 | 7,5 | 10 |
| Kugelschlag[ln Ibs] (DIN-EN-ISO 6272-1) | 80 | 80 | >160 | 80 | 80 | 80 | 80 |
| MEK-Test [ASTM D 4752] (Doppelhübe, 1kg Auflagegewicht) | 10 | 80 | 150 | 65 | 10 | 150 | 150 |
| Topfzeit des 2-K-Systems | - | 4 h | 1 d | > 1 d | - | 3 h | 4h |

## Patentansprüche

1. Vernetzer der Formel I oder eine Mischung von mindestens zwei Vernetzern der Formel (I) 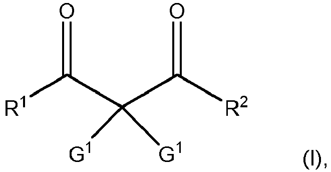
wobei R¹ und R² jeweils unabhängig voneinander ausgewählt sind aus H, -(CH₂)ᵣR⁴, mit r = 0 bis 12, insbesondere r = 1 bis 8, -OR⁵, -NHR⁵, wobei R⁴ und R⁵ jeweils unabhängig voneinander aus der Gruppe, bestehend aus H, einer optional ein Heteroatom, insbesondere -O- und/oder -N-, enthaltenden Alkylgruppe mit 1 bis 18 C-Atomen, einer optional ein Heteroatom, insbesondere -O-und/oder-N-, enthaltenden Cycloalkylgruppe mit 3 bis 18 C-Atomen, einer optional ein Heteroatom, insbesondere -O- und/oder -N-, enthaltenden Alkylarylgruppe mit 6 bis 18 C-Atomen, einer bivalenten Alkylengruppe mit 1 bis 10 C-Atomen, einer Alkylenoxidgruppe mit mindestens 4 C-Atomen, insbesondere mit 4 bis 16 C-Atomen, beispielsweise eine Epoxybutyl-, Epoxypentyl-, Epoxyhexyl-, Epoxyheptyl-, Epoxyoctyl-, Epoxynonyl- oder Epoxydecylgruppe, einer Polyethergruppe, wie Polyalkylenoxidpolyether, einer Polyhydroxy-funktionelle Gruppe mit 1 bis 18 C-Atomen, einer -O- und/oder -N- enthaltenden Heteroaromatgruppe mit 5 bis 18 C-Atomen und einer -O- oder -NH-Polyethergruppe, der eine oder mehrere verschiedene Polyglykoleinheiten (CH₂CH₂O)ₚR"enthält, wovon vorzugsweise mindestens eine endständig angeordnet ist, wobei p 4 bis 20 und R" ein Alkyl-Rest mit 1 bis 18 C-Atomen oder H ist, ausgewählt werden, und
wobei jedes G¹ einer Gruppe der Formel IIa entspricht,
-(C=O)-NH-R-Si(OR')₃ (IIa),
wobei R in der Formel IIa jeweils unabhängig voneinander einem aliphatischen (Cyclo)Alkylenrest mit 1 bis 10 C-Atomen entspricht, und R' in Formel IIa jeweils unabhängig einen linearen, verzweigten oder cyclischen Alkylrest mit 1 bis 10 C-Atomen darstellt.

2. Vernetzer nach Anspruch 1 **dadurch gekennzeichnet, dass** a) in dem Vernetzer der Formel (I) mindestens eines von R¹ oder R² ausgewählt ist aus -OR⁵, wobei R⁵ wie vorstehend definiert ist, oder b) in dem Vernetzer der Formel (I) R¹ und R² ausgewählt sind aus -OR₅, wobei R⁵ wie vorstehend definiert ist.

3. Zusammensetzung, umfassend mindestens einen Vernetzer der allgemeinen Formel I oder eine Mischung enthaltend mindestens zwei der Vernetzer der allgemeinen Formel I, 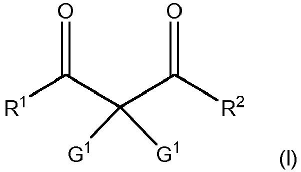
wobei R¹ und R² jeweils unabhängig voneinander ausgewählt sind aus H, -(CH₂)ᵣR⁴, mit r = 0 bis 12, insbesondere r = 1 bis 8, -OR⁵, -NHR⁵, wobei R⁴ und R⁵ jeweils unabhängig voneinander aus der Gruppe, bestehend aus H, einer optional ein Heteroatom, insbesondere -O- und/oder -N-, enthaltenden Alkylgruppe mit 1 bis 18 C-Atomen, einer optional ein Heteroatom, insbesondere -O-und/oder-N-, enthaltenden Cycloalkylgruppe mit 3 bis 18 C-Atomen, einer optional ein Heteroatom, insbesondere -O- und/oder -N-, enthaltenden Alkylarylgruppe mit 6 bis 18 C-Atomen, einer bivalenten Alkylengruppe mit 1 bis 10 C-Atomen, einer Alkylenoxidgruppe mit mindestens 4 C-Atomen, insbesondere mit 4 bis 16 C-Atomen, beispielsweise eine Epoxybutyl-, Epoxypentyl-, Epoxyhexyl-, Epoxyheptyl-, Epoxyoctyl-, Epoxynonyl- oder Epoxydecylgruppe, einer Polyethergruppe, wie Polyalkylenoxidpolyether, einer Polyhydroxy-funktionelle Gruppe mit 1 bis 18 C-Atomen, einer -O- und/oder -N- enthaltenden Heteroaromatgruppe mit 5 bis 18 C-Atomen und einer -O- oder -NH-Polyethergruppe, der eine oder mehrere verschiedene Polyglykoleinheiten (CH₂CH₂O)ₚR"enthält, wovon vorzugsweise mindestens eine endständig angeordnet ist, wobei p 4 bis 20 und R" ein Alkyl-Rest mit 1 bis 18 C-Atomen oder H ist, ausgewählt werden, und
wobei jedes G¹ einer Gruppe der Formel IIa entspricht,
-(C=O)-NH-R-Si(OR')₃ (IIa),
wobei R in der Formel (IIa) jeweils unabhängig voneinander einem aliphatischen (Cyclo)Alkylenrest mit 1 bis 10 C-Atomen entspricht, und R' in Formel (IIa) jeweils unabhängig einen linearen, verzweigten oder cyclischen Alkylrest mit 1 bis 10 C-Atomen darstellt.

4. Zusammensetzung nach Anspruch 3, **dadurch gekennzeichnet, dass**
a) R¹ und R² in Formel (I) ausgewählt sind aus -OR⁵, wobei R⁵ wie vorstehend definiert ist, oder
b) R¹ in Formel (I) ausgewählt ist aus -(CH₂)ᵣR⁴, mit (i) r = 0 oder (ii) r =1 bis 12, insbesondere r = 1 bis 8, wobei R⁴ jeweils unabhängig voneinander aus der Gruppe, bestehend aus einer optional ein Heteroatom, insbesondere -O- und/oder-N-, enthaltenden Alkylgruppe mit 1 bis 18 C-Atomen, einer optional ein Heteroatom, insbesondere -O- und/oder -N-, enthaltenden Cycloalkylgruppe mit 3 bis 18 C-Atomen, einer ein Heteroatom, insbesondere -O- und/oder-N-, enthaltenden Alkylarylgruppe mit 6 bis 18 C-Atomen, einer Alkylenoxidgruppe mit mindestens 4 C-Atomen, insbesondere mit 4 bis 16 C-Atomen und einer -O- und/oder -N- enthaltenden Heteroaromatgruppe mit 5 bis 18 C-Atomen, ausgewählt wird, und R² ausgewählt ist aus -OR⁵, wobei R⁵ wie vorstehend definiert ist.

5. Zusammensetzung nach Anspruch 3 oder 4, **dadurch gekennzeichnet, dass** der Vernetzer der Formel (I) einen β-Di-Ester, beispielsweise einen Malonsäureester, ein cyclisches β-Di-Keton, einen β-Ketoester und/oder ein β-Amidester darstellt.

6. Zusammensetzung nach einem der Ansprüche 3 bis 5, **dadurch gekennzeichnet, dass** in der Formel (IIa) R jeweils unabhängig voneinander einem aliphatischen Alkylenrest mit 1 bis 10 C-Atomen entspricht und R' jeweils unabhängig voneinander einen linearen, verzweigten oder cyclischen Alkylrest mit 1 bis 4 C-Atomen oder H darstellt.

7. Zusammensetzung nach einem der Ansprüche 3 bis 6, **dadurch gekennzeichnet, dass** in Formel (IIa) R jeweils voneinander unabhängig einem aliphatischen Alkylenrest mit 1 bis 10 C-Atomen entspricht, R' in Formel (IIa) jeweils unabhängig voneinander einen linearen, verzweigten oder cyclischen Alkylrest mit 1 bis 4 C-Atomen oder H darstellt, und in Formel (I) R¹ und R² jeweils unabhängig voneinander ausgewählt sind aus -OR⁵, wobei R⁵ ausgewählt ist aus einer Alkylgruppe mit 1 bis 18 C-Atomen, einer Cycloalkylgruppe mit 3 bis 18 C-Atomen, einer Alkylarylgruppe mit 6 bis 18 C-Atomen und einer Alkylenoxidgruppe mit mindestens 4 C-Atomen.

8. Verfahren zur Herstellung einer Zusammensetzung umfassend einen Vernetzer der allgemeinen Formel (I) oder eine Mischung enthaltend mindestens zwei der Vernetzer der allgemeinen Formel (I),
indem in einem Schritt (i):
mindestens ein Isocyanatoalkylalkoxysilan der Formel (II) oder eine Mischung von mindestens zwei der Isocyanatoalkylalkoxysilane der Formel (II)
(R'O)₃Si-R-N=C=O (II)
wobei R jeweils unabhängig einem aliphatischen (Cyclo)Alkylenrest mit 1 bis 10 C-Atomen entspricht, und R' jeweils unabhängig einen linearen, verzweigten oder cyclischen Alkylrest mit 1 bis 10 C-Atomen darstellt,
mit einer organofunktionellen C-H-aziden Verbindung der Formel (III) mit mindestens zwei aziden Wasserstoffatomen umgesetzt wird, 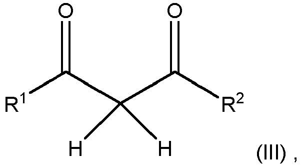 wobei R¹ und R² jeweils unabhängig voneinander ausgewählt sind aus H, -(CH₂)ᵣR⁴, mit r = 0 bis 12, insbesondere r = 1 bis 8, -OR⁵ und -NHR⁵ ausgewählt werden, wobei R⁴ und R⁵ jeweils unabhängig voneinander aus der Gruppe, bestehend aus H, einer optional ein Heteroatom, insbesondere -O- und/oder -N-, enthaltenden Alkylgruppe mit 1 bis 18 C-Atomen, einer optional ein Heteroatom, insbesondere -O- und/oder-N-, enthaltenden Cycloalkylgruppe mit 3 bis 18 C-Atomen, einer optional ein Heteroatom, insbesondere -O- und/oder -N-, enthaltenden Alkylarylgruppe mit 6 bis 18 C-Atomen, einer bivalenten Alkylengruppe mit 1 bis 10 C-Atomen, einer Alkylenoxidgruppe mit mindestens 4 C-Atomen, insbesondere mit 4 bis 16 C-Atomen, beispielsweise eine Epoxybutyl-, Epoxypentyl-, Epoxyhexyl-, Epoxyheptyl-, Epoxyoctyl-, Epoxynonyl- oder Epoxydecylgruppe, einer Polyethergruppe, wie Polyalkylenoxidpolyether, einer Polyhydroxy-funktionelle Gruppe mit 1 bis 18 C-Atomen, einer -O- und/oder -N- enthaltenden Heteroaromatgruppe mit 5 bis 18 C-Atomen und einer -O- oder -NH-Polyethergruppe, der eine oder mehrere verschiedene Polyglykoleinheiten (CH₂CH₂O)ₚR"enthält, wovon vorzugsweise mindestens eine endständig angeordnet ist, wobei p 4 bis 20 und R" ein Alkyl-Rest mit 1 bis 18 C-Atomen oder H ist.

9. Verfahren nach Anspruch 8, **dadurch gekennzeichnet, dass** die Umsetzung in Gegenwart eines Katalysators erfolgt.

10. Verfahren nach Anspruch 8 oder 9, **dadurch gekennzeichnet, dass** das Verfahren die nachfolgenden Schritte umfasst:
(ii) Abtrennen von überschüssigem Isocyanatoalkylalkoxysilan der Formel (II), oder Umsetzen von überschüssigem Isocyanatoalkylalkoxysilan der Formel (II) mit einer Hydroxy-funktionellen Kohlenwasserstoff-Verbindung, und
(iii) Erhalten einer Zusammensetzung umfassend mindestens einen Vernetzer der allgemeinen Formel (I) oder eine Mischung von mindesten zwei der Vernetzer der Formel (I).

11. Verfahren nach einem der Ansprüche 8 bis 10, **dadurch gekennzeichnet, dass** das Isocyanatoalkylalkoxysilan der Formel (II) ausgewählt ist aus Isocyanatopropyltriethoxysilan und Isocyanatopropyltrimethoxysilan.

12. Verfahren nach einem der Ansprüche 8 bis 11, **dadurch gekennzeichnet, dass** die Umsetzung von Isocyanatoalkylalkoxysilan der Formel (II) mit der organofunktionellen C-H-aziden Verbindung der Formel (III) im molaren Verhältnis von 1,1 : 1 bis 100 : 1 erfolgt.

13. Zusammensetzung, umfassend
(i) mindestens eine Vernetzer oder eine Mischung von Vernetzer nach Anspruch 1 oder 2 oder eine Zusammensetzung nach einem der Ansprüche 3 bis 7 oder eine Zusammensetzung erhältlich nach einem Verfahren nach einem der Ansprüche 8 bis 12,
(ii) optional organische Lösemittel
(iii) ein oder mehrere Bindemittel,
(iv) optional bis 4 Gew.-% mindestens eines Katalysators,
(v) optional Hilfs- und/oder Zusatzstoffe,
(vi) optional Wasser.

14. Verwendung einer Zusammensetzung nach einem der Ansprüche 1 bis 7 oder erhalten nach einem der Ansprüche 8 bis 12 zur Behandlung von Substraten basierend auf Metallen, Legierungen, Holz, Glas, Stein, keramischen Materialien, Hybridmaterialen, Beton, harten Kunststoffen, flexiblen Kunststoffen, Textilien, Leder und/oder Papier.

## Claims

1. Crosslinker of the formula I or a mixture of at least two crosslinkers of the formula (I) 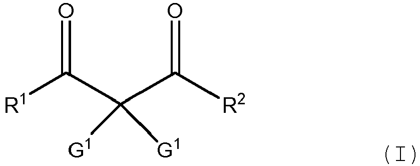
where R¹ and R² are each independently selected from H, -(CH₂)ᵣR⁴, with r = 0 to 12, especially r = 1 to 8, -OR⁵, -NHR⁵, where R⁴ and R⁵ are each independently selected from the group consisting of H, an alkyl group optionally containing a heteroatom, especially -O-and/or -N-, and having 1 to 18 carbon atoms, a cycloalkyl group optionally containing a heteroatom, especially - O- and/or -N-, and having 3 to 18 carbon atoms, an alkylaryl group optionally containing a heteroatom, especially -O- and/or -N-, and having 6 to 18 carbon atoms, a bivalent alkylene group having 1 to 10 carbon atoms, an alkylene oxide group having at least 4 carbon atoms, especially having 4 to 16 carbon atoms, for example an epoxybutyl, epoxypentyl, epoxyhexyl, epoxyheptyl, epoxyoctyl, epoxynonyl or epoxydecyl group, a polyether group, such as polyalkylene oxide polyether, a polyhydroxy-functional group having 1 to 18 carbon atoms, a heteroaromatic group containing -O-and/or -N- and having 5 to 18 carbon atoms and an -O-or -NH-polyether group containing one or more different polyglycol units (CH₂CH₂O)ₚR", of which preferably at least one is arranged in a terminal position, where p is 4 to 20 and R" is an alkyl radical having 1 to 18 carbon atoms or H, and
where each G¹ corresponds to a group of the formula IIa
-(C=O)-NH-R-Si(OR')₃ (IIa)
where R in the formula IIa in each case independently corresponds to an aliphatic (cyclo)alkylene radical having 1 to 10 carbon atoms, and R' in formula IIa in each case independently represents a linear, branched or cyclic alkyl radical having 1 to 10 carbon atoms.

2. Crosslinker according to Claim 1, **characterized in that** a) in the crosslinker of the formula (I) at least one of R¹ and R² is selected from -OR⁵ where R⁵ is as defined above, or b) in the crosslinker of the formula (I) R¹ and R² are selected from -OR₅ where R⁵ is as defined above.

3. Composition comprising at least one crosslinker of the general formula I or a mixture comprising at least two of the crosslinkers of the general formula I 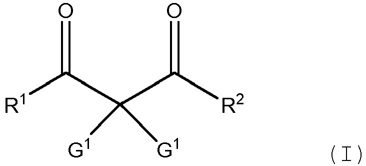
where R¹ and R² are each independently selected from H, -(CH₂)ᵣR⁴, with r = 0 to 12, especially r = 1 to 8, -OR⁵, -NHR⁵, where R⁴ and R⁵ are each independently selected from the group consisting of H, an alkyl group optionally containing a heteroatom, especially -O-and/or -N-, and having 1 to 18 carbon atoms, a cycloalkyl group optionally containing a heteroatom, especially - O- and/or -N-, and having 3 to 18 carbon atoms, an alkylaryl group optionally containing a heteroatom, especially -O- and/or -N-, and having 6 to 18 carbon atoms, a bivalent alkylene group having 1 to 10 carbon atoms, an alkylene oxide group having at least 4 carbon atoms, especially having 4 to 16 carbon atoms, for example an epoxybutyl, epoxypentyl, epoxyhexyl, epoxyheptyl, epoxyoctyl, epoxynonyl or epoxydecyl group, a polyether group, such as polyalkylene oxide polyether, a polyhydroxy-functional group having 1 to 18 carbon atoms, a heteroaromatic group containing -O-and/or -N- and having 5 to 18 carbon atoms and an -O-or -NH-polyether group containing one or more different polyglycol units (CH₂CH₂O) ₚR", of which preferably at least one is arranged in a terminal position, where p is 4 to 20 and R" is an alkyl radical having 1 to 18 carbon atoms or H, and
where each G¹ corresponds to a group of the formula IIa
-(C=O)-NH-R-Si(OR')₃ (IIa)
where R in the formula (IIa) in each case independently corresponds to an aliphatic (cyclo)alkylene radical having 1 to 10 carbon atoms, and R' in formula (IIa) in each case independently represents a linear, branched or cyclic alkyl radical having 1 to 10 carbon atoms.

4. Composition according to Claim 3, **characterized in that**
a) R¹ and R² in formula (I) are selected from -OR⁵ where R⁵ is as defined above, or
b) R¹ in formula (I) is selected from -(CH₂)ᵣR⁴, with (i) r = 0 or (ii) r =1 to 12, especially r = 1 to 8, where R⁴ is in each case independently selected from the group consisting of an alkyl group optionally containing a heteroatom, especially -O- and/or -N-, and having 1 to 18 carbon atoms, a cycloalkyl group optionally containing a heteroatom, especially -O- and/or -N-, and having 3 to 18 carbon atoms, an alkylaryl group containing a heteroatom, especially -O- and/or -N-, and having 6 to 18 carbon atoms, an alkylene oxide group having at least 4 carbon atoms, especially having 4 to 16 carbon atoms, and a heteroaromatic group containing -O- and/or -N- and having 5 to 18 carbon atoms, and R² is selected from -OR⁵ where R⁵ is as defined above.

5. Composition according to Claim 3 or 4, **characterized in that** the crosslinker of the formula (I) is a β-diester, for example a malonic ester, a cyclic β-diketone, a β-keto ester and/or a β-amide ester.

6. Composition according to any of Claims 3 to 5, **characterized in that**
R in the formula (IIa) in each case independently corresponds to an aliphatic alkylene radical having 1 to 10 carbon atoms, and R' in each case independently represents a linear, branched or cyclic alkyl radical having 1 to 4 carbon atoms or H.

7. Composition according to any of Claims 3 to 6, **characterized in that** R in formula (IIa) in each case independently corresponds to an aliphatic alkylene radical having 1 to 10 carbon atoms, R' in formula (IIa) in each case independently represents a linear, branched or cyclic alkyl radical having 1 to 4 carbon atoms or H, and R¹ and R² in formula (I) are each independently selected from -OR⁵ where R⁵ is selected from an alkyl group having 1 to 18 carbon atoms, a cycloalkyl group having 3 to 18 carbon atoms, an alkylaryl group having 6 to 18 carbon atoms and an alkylene oxide group having at least 4 carbon atoms.

8. Process for preparing a composition comprising a crosslinker of the general formula (I) or a mixture comprising at least two of the crosslinkers of the general formula (I)
by reacting, in a step (i):
at least one isocyanatoalkylalkoxysilane of the formula (II) or a mixture of at least two of the isocyanatoalkylalkoxysilanes of the formula (II)
(R'O)₃Si-R-N=C=O (II)
where R in each case independently corresponds to an aliphatic (cyclo)alkylene radical having 1 to 10 carbon atoms, and R' in each case independently represents a linear, branched or cyclic alkyl radical having 1 to 10 carbon atoms,
with an organofunctional C-H-acidic compound of the formula (III) having at least two acidic hydrogen atoms, 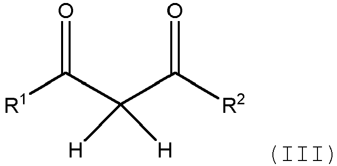 where R¹ and R² are each independently selected from H, -(CH₂)ᵣR⁴, with r = 0 to 12, especially r = 1 to 8, -OR⁵ and -NHR⁵, where R⁴ and R⁵ are each independently selected from the group consisting of H, an alkyl group optionally containing a heteroatom, especially -O-and/or -N-, and having 1 to 18 carbon atoms, a cycloalkyl group optionally containing a heteroatom, especially - O- and/or -N-, and having 3 to 18 carbon atoms, an alkylaryl group optionally containing a heteroatom, especially -O- and/or -N-, and having 6 to 18 carbon atoms, a bivalent alkylene group having 1 to 10 carbon atoms, an alkylene oxide group having at least 4 carbon atoms, especially having 4 to 16 carbon atoms, for example an epoxybutyl, epoxypentyl, epoxyhexyl, epoxyheptyl, epoxyoctyl, epoxynonyl or epoxydecyl group, a polyether group, such as polyalkylene oxide polyether, a polyhydroxy-functional group having 1 to 18 carbon atoms, a heteroaromatic group containing -O-and/or -N- and having 5 to 18 carbon atoms and an -O-or -NH-polyether group containing one or more different polyglycol units (CH₂CH₂O) ₚR", of which preferably at least one is arranged in a terminal position, where p is 4 to 20 and R" is an alkyl radical having 1 to 18 carbon atoms or H.

9. Process according to Claim 8, **characterized in that** the reaction is effected in the presence of a catalyst.

10. Process according to Claim 8 or 9, **characterized in that** the process comprises the following steps:
(ii) removing excess isocyanatoalkylalkoxysilane of the formula (II), or reacting excess isocyanatoalkylalkoxysilane of the formula (II) with a hydroxy-functional hydrocarbon compound, and
(iii) obtaining a composition comprising at least one crosslinker of the general formula (I) or a mixture of at least two of the crosslinkers of the formula (I).

11. Process according to any of Claims 8 to 10, **characterized in that** the isocyanatoalkylalkoxysilane of the formula (II) is selected from isocyanatopropyltriethoxysilane and isocyanatopropyltrimethoxysilane.

12. Process according to any of Claims 8 to 11, **characterized in that** the reaction of isocyanatoalkylalkoxysilane of the formula (II) with the organofunctional C-H-acidic compound of the formula (III) is effected in a molar ratio of 1.1:1 to 100:1.

13. Composition comprising
(i) at least one crosslinker or a mixture of crosslinkers according to Claim 1 or 2 or
a composition according to any of Claims 3 to 7 or a
composition obtainable by a process according to any of
Claims 8 to 12,
(ii) optionally organic solvents,
(iii) one or more binders,
(iv) optionally up to 4% by weight of at least one catalyst,
(v) optionally auxiliaries and/or additives,
(vi) optionally water.

14. Use of a composition according to any of Claims 1 to 7 or obtained according to any of Claims 8 to 12 for treatment of substrates based on metals, alloys, wood, glass, stone, ceramic materials, hybrid materials, concrete, rigid plastics, flexible plastics, textiles, leather and/or paper.

## Revendications

1. Réticulant de formule I ou mélange d'au moins deux réticulants de formule (I) 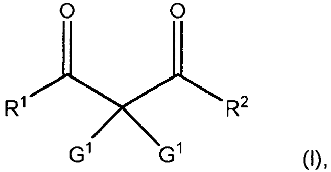 dans laquelle R¹ et R² sont choisis, à chaque fois indépendamment l'un de l'autre, parmi H, -(CH₂)ᵣR⁴, avec r = 0 à 12, en particulier r = 1 à 8, -OR⁵, -NHR⁵, où R⁴ et R⁵ sont choisis, à chaque fois indépendamment l'un de l'autre, dans le groupe constitué par H, un groupe alkyle comprenant 1 à 18 atomes de carbone contenant éventuellement un hétéroatome, en particulier -O-et/ou -N-, un groupe cycloalkyle comprenant 3 à 18 atomes de carbone, contenant éventuellement un hétéroatome, en particulier -O- et/ou -N-, un groupe alkylaryle comprenant 6 à 18 atomes de carbone, contenant éventuellement un hétéroatome, en particulier -O-et/ou -N-, un groupe alkylène divalent comprenant 1 à 10 atomes de carbone, un groupe oxyde d'alkylène comprenant au moins 4 atomes de carbone, en particulier 4 à 16 atomes de carbone, par exemple un groupe époxybutyle, un groupe époxypentyle, un groupe époxyhexyle, un groupe époxyheptyle, un groupe époxyoctyle, un groupe époxynonyle ou un groupe époxydécyle, un groupe polyéther, tel qu'un poly(oxyde d'alkylène)-polyéther, un groupe à fonctionnalité polyhydroxy comprenant 1 à 18 atomes de carbone, un groupe hétéroaromatique comprenant 5 à 18 atomes de carbone contenant -O- et/ou -N- et un groupe -O-polyéther ou -NH-polyéther, qui contient un ou plusieurs motifs polyglycol différents (CH₂CH₂O)ₚR", dont de préférence au moins un est disposé au niveau d'une extrémité, p valant 4 à 20 et R" représentant un radical alkyle comprenant 1 à 18 atomes de carbone ou H et chaque G¹ correspond à un groupe de formule IIa
-(C=O)-NH-R-Si(OR')₃ (IIa),
où R dans la formule IIa correspond à chaque fois indépendamment les uns des autres à un radical (cyclo)alkylène aliphatique comprenant 1 à 10 atomes de carbone et R' dans la formule IIa représente à chaque fois indépendamment un radical alkyle linéaire, ramifié ou cyclique comprenant 1 à 10 atomes de carbone.

2. Réticulant selon la revendication 1, **caractérisé en ce que** a), dans le réticulant de formule (I), au moins un radical parmi R¹ ou R² est choisi parmi -OR⁵, R⁵ étant défini comme ci-dessus, ou b), dans le réticulant de formule (I), R¹ et R² sont choisis parmi -OR⁵, R⁵ étant défini comme ci-dessus.

3. Composition, comprenant au moins un réticulant de formule générale I ou un mélange contenant au moins deux des réticulants de formule générale I, 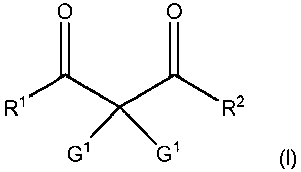 dans laquelle R¹ et R² sont choisis, à chaque fois indépendamment l'un de l'autre, parmi H, -(CH₂)ᵣR⁴, avec r = 0 à 12, en particulier r = 1 à 8, -OR⁵, -NHR⁵, où R⁴ et R⁵ sont choisis, à chaque fois indépendamment l'un de l'autre, dans le groupe constitué par H, un groupe alkyle comprenant 1 à 18 atomes de carbone contenant éventuellement un hétéroatome, en particulier -O-et/ou -N-, un groupe cycloalkyle comprenant 3 à 18 atomes de carbone, contenant éventuellement un hétéroatome, en particulier -O- et/ou -N-, un groupe alkylaryle comprenant 6 à 18 atomes de carbone, contenant éventuellement un hétéroatome, en particulier -O-et/ou -N-, un groupe alkylène divalent comprenant 1 à 10 atomes de carbone, un groupe oxyde d'alkylène comprenant au moins 4 atomes de carbone, en particulier 4 à 16 atomes de carbone, par exemple un groupe époxybutyle, un groupe époxypentyle, un groupe époxyhexyle, un groupe époxyheptyle, un groupe époxyoctyle, un groupe époxynonyle ou un groupe époxydécyle, un groupe polyéther, tel qu'un poly(oxyde d'alkylène)-polyéther, un groupe à fonctionnalité polyhydroxy comprenant 1 à 18 atomes de carbone, un groupe hétéroaromatique comprenant 5 à 18 atomes de carbone contenant -O- et/ou -N- et un groupe -O-polyéther ou -NH-polyéther, qui contient un ou plusieurs motifs polyglycol différents (CH₂CH₂O)ₚR", dont de préférence au moins un est disposé au niveau d'une extrémité, p valant 4 à 20 et R" représentant un radical alkyle comprenant 1 à 18 atomes de carbone ou H et chaque G¹ correspond à un groupe de formule IIa
-(C=O)-NH-R-Si(OR')₃ (IIa),
où R dans la formule (IIa) correspond à chaque fois indépendamment les uns des autres à un radical (cyclo)alkylène aliphatique comprenant 1 à 10 atomes de carbone et R' dans la formule (IIa) représente à chaque fois indépendamment un radical alkyle linéaire, ramifié ou cyclique comprenant 1 à 10 atomes de carbone.

4. Composition selon la revendication 3, **caractérisée en ce que**
a) R¹ et R² dans la formule (I) sont choisis parmi -OR⁵, R⁵ étant défini comme ci-dessus, ou
b) R¹ dans la formule (I) est choisi parmi -(CH₂)ᵣR⁴, avec (i) r = 0 ou (ii) r = 1 à 12, en particulier r = 1 à 8, où R⁴ est choisi, à chaque fois indépendamment les uns des autres, dans le groupe constitué par un groupe alkyle comprenant 1 à 18 atomes de carbone contenant éventuellement un hétéroatome, en particulier -O- et/ou -N-, un groupe cycloalkyle comprenant 3 à 18 atomes de carbone, contenant éventuellement un hétéroatome, en particulier -O- et/ou -N-, un groupe alkylaryle comprenant 6 à 18 atomes de carbone, contenant éventuellement un hétéroatome, en particulier -O-et/ou -N-, un groupe oxyde d'alkylène comprenant au moins 4 atomes de carbone, en particulier 4 à 16 atomes de carbone, et un groupe hétéroaromatique comprenant 5 à 18 atomes de carbone contenant -O-et/ou -N- et R² est choisi parmi -OR⁵, R⁵ étant défini comme ci-dessus.

5. Composition selon la revendication 3 ou 4, **caractérisée en ce que** le réticulant de formule (I) représente un β-di-ester, par exemple un ester de l'acide malonique, une β-di-cétone cyclique, un β-cétoester et/ou un β-amidoester.

6. Composition selon l'une quelconque des revendications 3 à 5, **caractérisée en ce que**, dans la formule (IIa), R correspond à chaque fois indépendamment les uns des autres à un radical alkylène aliphatique comprenant 1 à 10 atomes de carbone et R' représente à chaque fois indépendamment les uns des autres un radical alkyle linéaire, ramifié ou cyclique comprenant 1 à 4 atomes de carbone ou H.

7. Composition selon l'une quelconque des revendications 3 à 6, **caractérisée en ce que**, dans la formule (IIa), R correspond à chaque fois indépendamment les uns des autres à un radical alkylène aliphatique comprenant 1 à 10 atomes de carbone R' dans la formule (IIa) représente à chaque fois indépendamment les uns des autres un radical alkyle linéaire, ramifié ou cyclique comprenant 1 à 4 atomes de carbone ou H et, dans la formule (I), R¹ et R² sont choisis, à chaque fois indépendamment les uns des autres, parmi -OR⁵, R⁵ étant choisi parmi un groupe alkyle comprenant 1 à 18 atomes de carbone, un groupe cycloalkyle comprenant 3 à 18 atomes de carbone, un groupe alkylaryle comprenant 6 à 18 atomes de carbone et un groupe oxyde d'alkylène comprenant au moins 4 atomes de carbone.

8. Procédé pour la préparation d'une composition, comprenant un réticulant de formule générale (I) ou un mélange contenant au moins deux des réticulants de formule générale (I),
dans lequel, dans une étape (i) :
au moins un isocyanatoalkylalcoxysilane de formule (II) ou un mélange d'au moins deux des isocyanatoalkylalcoxysilanes de formule (II)
(R'O)₃Si-R-N=C=O (II)
dans laquelle R correspond à chaque fois indépendamment les uns des autres à un radical (cyclo)alkylène aliphatique comprenant 1 à 10 atomes de carbone et R' représente à chaque fois indépendamment un radical alkyle linéaire, ramifié ou cyclique comprenant 1 à 10 atomes de carbone,
est transformé avec un composé C-H-acide organofonctionnel de formule (III) comprenant au moins deux atomes d'hydrogène acides, 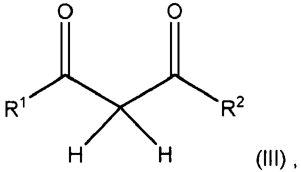 dans laquelle R¹ et R² sont choisis, à chaque fois indépendamment l'un de l'autre, parmi H, -(CH₂)ᵣR⁴, avec r = 0 à 12, en particulier r = 1 à 8, -OR⁵ et -NHR⁵, où R⁴ et R⁵ sont choisis, à chaque fois indépendamment l'un de l'autre, dans le groupe constitué par H, un groupe alkyle comprenant 1 à 18 atomes de carbone contenant éventuellement un hétéroatome, en particulier -O-et/ou -N-, un groupe cycloalkyle comprenant 3 à 18 atomes de carbone, contenant éventuellement un hétéroatome, en particulier -O- et/ou -N-, un groupe alkylaryle comprenant 6 à 18 atomes de carbone, contenant éventuellement un hétéroatome, en particulier -O-et/ou -N-, un groupe alkylène divalent comprenant 1 à 10 atomes de carbone, un groupe oxyde d'alkylène comprenant au moins 4 atomes de carbone, en particulier 4 à 16 atomes de carbone, par exemple un groupe époxybutyle, un groupe époxypentyle, un groupe époxyhexyle, un groupe époxyheptyle, un groupe époxyoctyle, un groupe époxynonyle ou un groupe époxydécyle, un groupe polyéther, tel qu'un poly(oxyde d'alkylène)-polyéther, un groupe à fonctionnalité polyhydroxy comprenant 1 à 18 atomes de carbone, un groupe hétéroaromatique comprenant 5 à 18 atomes de carbone contenant -O- et/ou -N- et un groupe -O-polyéther ou -NH-polyéther, qui contient un ou plusieurs motifs polyglycol différents (CH₂CH₂O)ₚR", dont de préférence au moins un est disposé au niveau d'une extrémité, p valant 4 à 20 et R" représente un radical alkyle comprenant 1 à 18 atomes de carbone ou H.

9. Procédé selon la revendication 8, **caractérisé en ce que** la transformation a lieu en présence d'un catalyseur.

10. Procédé selon la revendication 8 ou 9, **caractérisé en ce que** le procédé comprend les étapes suivantes :
(ii) séparation d'isocyanatoalkylalcoxysilane de formule (II) en excès ou transformation d'isocyanatoalkylalcoxysilane de formule (II) en excès avec un composé hydrocarboné à fonctionnalité hydroxy et
(iii) obtention d'une composition, comprenant au moins un réticulant de formule générale (I) ou un mélange d'au moins deux des réticulants de formule générale (I).

11. Procédé selon l'une quelconque des revendications 8 à 10, **caractérisé en ce que** l'isocyanatoalkylalcoxysilane de formule (II) est choisi parmi l'isocyanatopropyltriéthoxysilane et l'isocyanatopropyltriméthoxysilane.

12. Procédé selon l'une quelconque des revendications 8 à 11, **caractérisé en ce que** la transformation d'isocyanatoalkylalcoxysilane de formule (II) avec le composé C-H-acide organofonctionnel de formule (III) a lieu dans un rapport molaire de 1,1:1 à 100:1.

13. Composition, comprenant
(i) au moins un réticulant ou un mélange de réticulants selon la revendication 1 ou 2 ou une composition selon l'une quelconque des revendications 3 à 7 ou une composition pouvant être obtenue selon un procédé selon l'une quelconque des revendications 8 à 12,
(ii) éventuellement des solvants organiques
(iii) un ou plusieurs liants,
(iv) éventuellement jusqu'à 4% en poids d'au moins un catalyseur,
(v) éventuellement des adjuvants et/ou additifs,
(vi) éventuellement de l'eau.

14. Utilisation d'une composition selon l'une quelconque des revendications 1 à 7 ou obtenue selon l'une quelconque des revendications 8 à 12 pour le traitement de substrats à base de métaux, d'alliages, de bois, de verre, de pierre, de matériaux céramiques, de matériaux hybrides, de béton, de matériaux synthétiques durs, de matériaux synthétiques souples, de textiles, de cuir et/ou de papier.
